# EUROPEAN PATENT APPLICATION

(11) **EP 2 058 928 A2**
(43) Date of publication of application: **13.05.2009**
(21) Application number: 08253655.8
(22) Date of filing: 07.11.2008
(51) Int. Cl.: H02K 21/04

(54) **Electric machinery with a conduction winding excited magnetic poles sandwiched PM magnetic pole**

(30) Priority: 09.11.2007 US 979861
(71) Applicant: Tai-Her, Yang, Si-Hu Town Dzan-Hwa (TW)
(72) Inventor: Tai-Her, Yang, Si-Hu Town Dzan-Hwa (TW)
(74) Representative: Pratt, David Martin

(57) **Abstract**

An electric machinery provided with a PM magnetic pole sandwiched by conduction winding excited magnetic poles is related to an innovative design of having a PM magnetic pole sandwiched by individual magnetic poles of conduction winding excited so to prevent the PM magnetic pole from falling off due to vibration and to prevent from weakening magnetic force by inverse excitement when the electric machinery is running.

## Description

### BACKGROUND OF THE INVENTION

### (a) Field of the Invention

The present invention is related to an electric machinery provided with a PM magnetic pole sandwiched by conduction winding excited magnetic poles, and more particularly, to one that has a PM magnetic pole sandwiched in the mid section of the magnetic circuit from an individual magnetic pole excited by conduction winding, or by an individual pole and a magnetic circuit, or by two individual magnetic circuits with different polarity of an individual magnetic pole excited by conduction winding and another individual magnetic pole excited by conduction winding of different polarity mounted in various types of electric machinery of the prior art.

### (b) Description of the Prior Art:

A magnetic polar structure to produce EME operation is mounted in a conventional DC or AC revolving or linear electric machinery, whether it is of commutator brush, brushless, ring brush, synchronous, asynchronous, internal revolving, external revolving, revolving with the electric magnetic structure at middle, double-acting, triple-acting, multi-layer, multi-ring, linear, DC brushless, or inverter electric machinery, or an electric machinery functioning as a generator or as a motor or as both a generator and a motor, coupling transmission device, as an EME vortex coupling transmission device, or an EME vortex braking device.

The magnetic pole structure of the prior art is comprised of:
- PM magnetic pole structure;
- DC or AC conduction winding excited individual magnetic pole structure; and
- A conduction winding excited individual magnetic pole having on its polar face disposed with an accumulative or differential excitement PM magnetic pole.

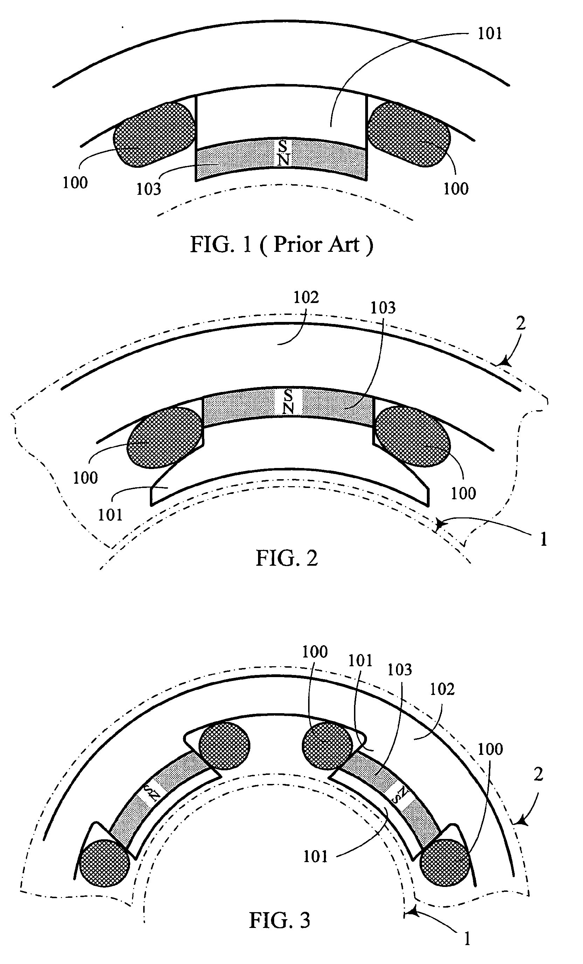

As illustrated in Fig. 1 of the accompanying drawings for a schematic view showing a structure of an accumulative or differential excitement PM magnetic pole disposed on a polar face of a conventional conduction winding excited individual magnetic pole, a PM magnetic pole 103 of accumulative excitement is disposed on a surface of a conduction winding 100 excited magnetic pole 101. The structure as illustrated in Fig. 1 provides advantage of reduction of excitement current but it is found with a flaw that the PM magnetic pole is vulnerable to falling off due to vibration or that magnetic force is weakened due to inverse excitement when the electric machinery is running; and the same flaw is also found with the structure of the PM magnetic pole.

### SUMMARY OF THE INVENTION

The primary purpose of the present invention is related to an electric machinery provided with a PM magnetic pole sandwiched by conduction winding excited magnetic poles, and more particularly, to one that has a PM magnetic pole sandwiched in the mid section of the magnetic circuit from an individual magnetic pole excited by conduction winding, or by an individual pole and a magnetic circuit, or by two individual magnetic circuits with different polarity of an individual magnetic pole excited by conduction winding and another individual magnetic pole excited by conduction winding of different polarity mounted in various types of electric machinery of the prior art.

With an innovative design of having the PM magnetic pole to be sandwiched by individual magnetic poles of conduction winding excited, the electric machinery provided with the PM magnetic pole sandwiched by conduction winding excited magnetic poles of the present invention is capable of preventing the PM magnetic pole from falling off due to vibration and preventing magnetic force from being weakened by inverse excitement when the electric machinery is running.

### BRIEF DESCRIPTION OF THE DRAWINGS

Fig. 1 is a schematic view showing a structure of an accumulative or differential excitement PM magnetic pole disposed on a polar face of a conventional conduction winding excited individual magnetic pole.
Fig. 2 is a schematic view showing a PM magnetic pole structure of the present invention applied in an individual magnetic pole sandwiched by a conduction winding excited individual magnetic pole and a magnetic circuit that is capable of indicating accumulative excitement for the conduction winding excited individual magnetic pole.
Fig. 3 is a schematic view showing a PM magnetic pole structure of the present invention applied in an individual magnetic pole sandwiched by a conduction winding excited individual magnetic pole and a magnetic circuit that is capable of indicating differential excitement for the conduction winding excited individual magnetic pole.

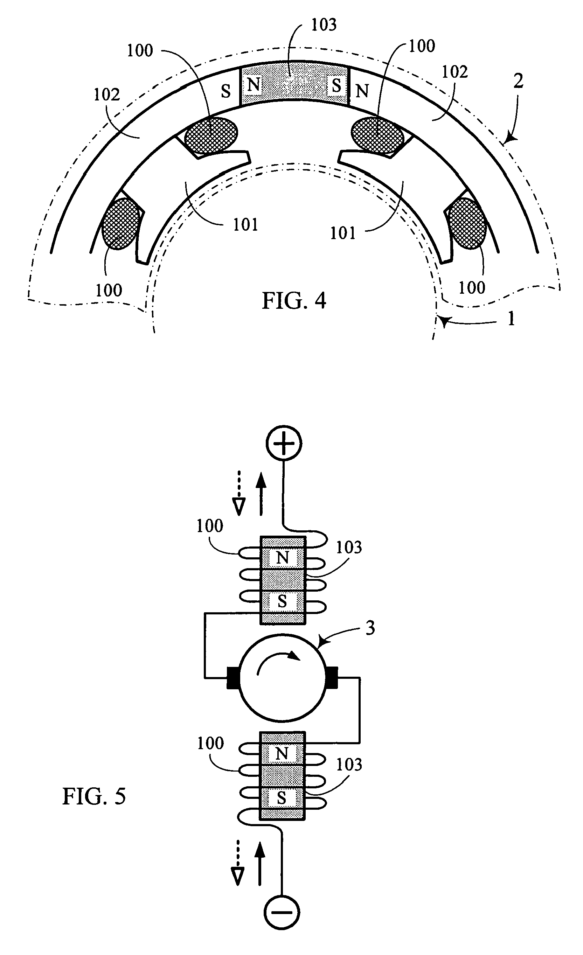

Fig. 4 is a schematic view showing a PM magnetic pole structure of the present invention applied in an individual magnetic pole sandwiched in a mid section of a magnetic circuit that is capable of indicating accumulative excitement for each conduction winding excited individual magnetic pole of different polarities disposed on both ends of the magnetic circuit.
Fig. 5 is a schematic view showing one of the embodiments of the present invention applied to function as a motor and a generator.

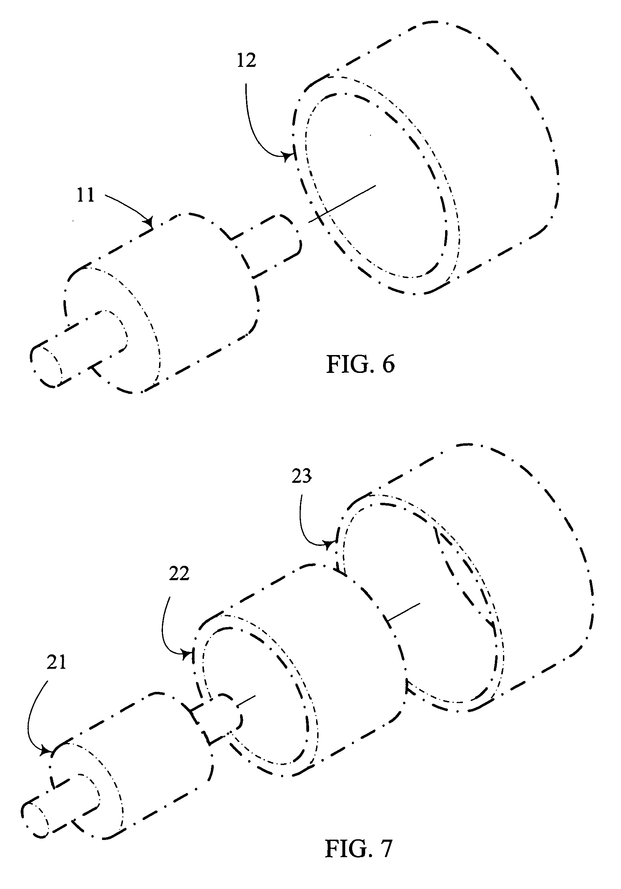

Fig. 6 is a schematic view showing a summary profile of a structure of a main unit of a conduction device of the present invention applied in a cylinder electric machinery without casing, bearing, locking member, cooling van, and optional conductive device.
Fig. 7 is a schematic view showing a summary profile of a structure of a main unit of a conduction device of the present invention applied in a coaxial 3-ring type electric machinery without casing, bearing, locking member, cooling van, and optional conductive device.

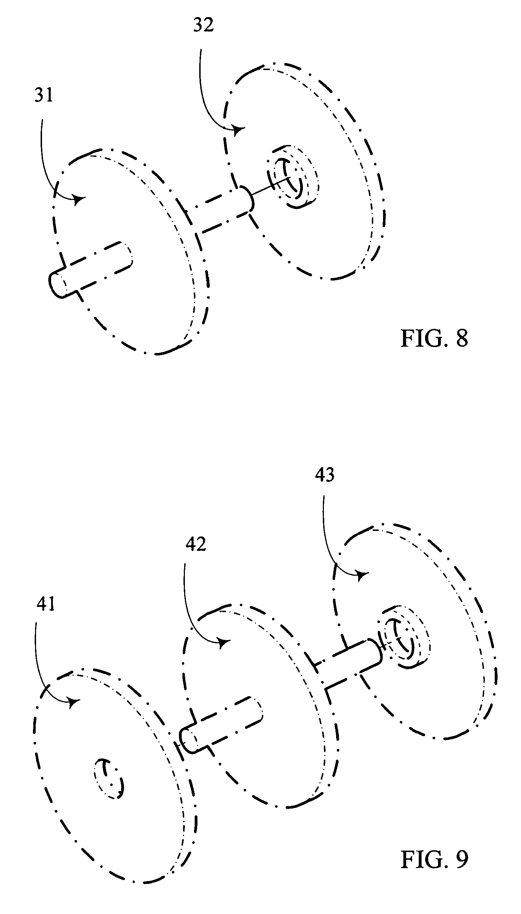

Fig. 8 is a schematic view showing a summary profile of a structure of a main unit of a conduction device of the present invention applied in a coaxial double layer type plate electric machinery without casing, bearing, locking member, cooling van, and optional conductive device.
Fig. 9 is a schematic view showing a summary profile of a structure of a main unit of a conduction device of the present invention applied in a coaxial 3-layer type plate electric machinery without casing, bearing, locking member, cooling van, and optional conductive device.

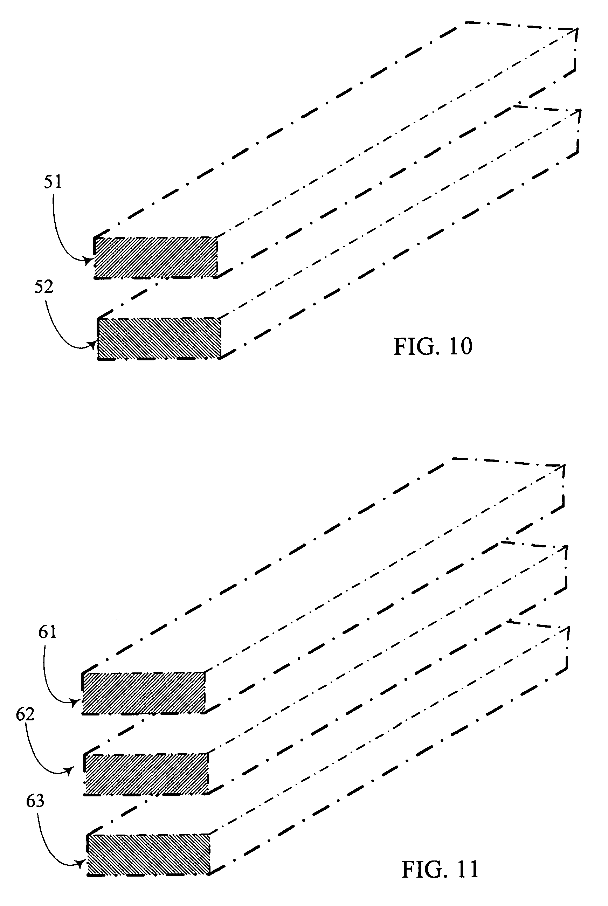

Fig. 10 is a schematic view showing a summary profile of a structure of a main unit of a conduction device of the present invention applied in a double layer type linear electric machinery without casing, bearing, locking member, cooling van, and optional conductive device.
Fig. 11 is a schematic view showing a summary profile of a structure of a main unit of a conduction device of the present invention applied in a 3-layer type linear electric machinery without casing, bearing, locking member, cooling van, and optional conductive device.

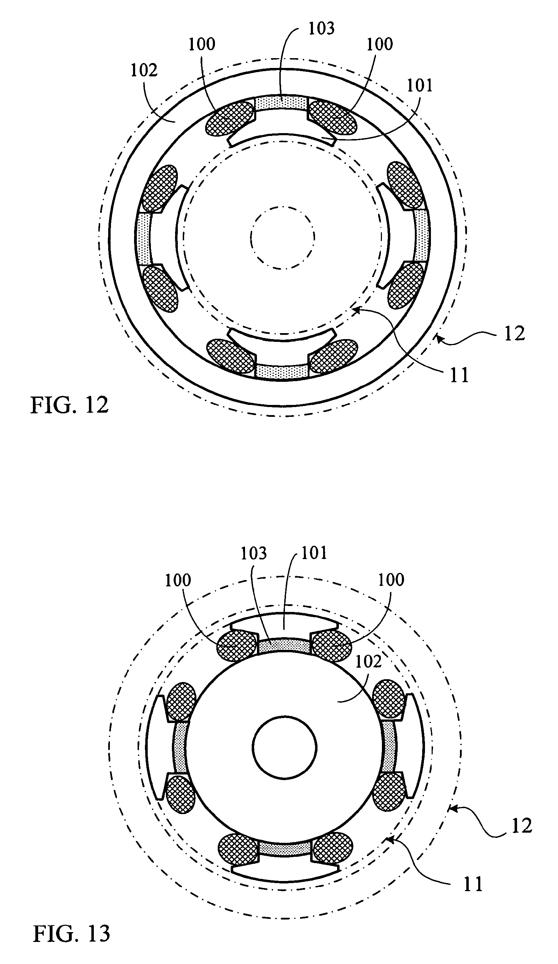

Fig. 12 is a schematic view showing a structure of the present invention applied in a cylinder electric machinery structure, wherein a PM magnetic pole indicating accumulative excitement sandwiched by a conduction winding excited individual magnetic pole and a magnetic circuit is disposed to an EME coupling aspect of the outer layer electric machinery structure in a direction facing the inner layer electric machinery structure to execute EME coupling with the inner layer electric machinery structure.
Fig. 13 is a schematic view showing a structure of the present invention applied in a cylinder electric machinery structure, wherein a PM magnetic pole indicating accumulative excitement sandwiched by a conduction winding excited individual magnetic pole and a magnetic circuit is disposed on an EME coupling aspect of the inner layer electric machinery structure in a direction facing the outer layer electric machinery structure to execute EME coupling with the outer layer electric machinery structure.

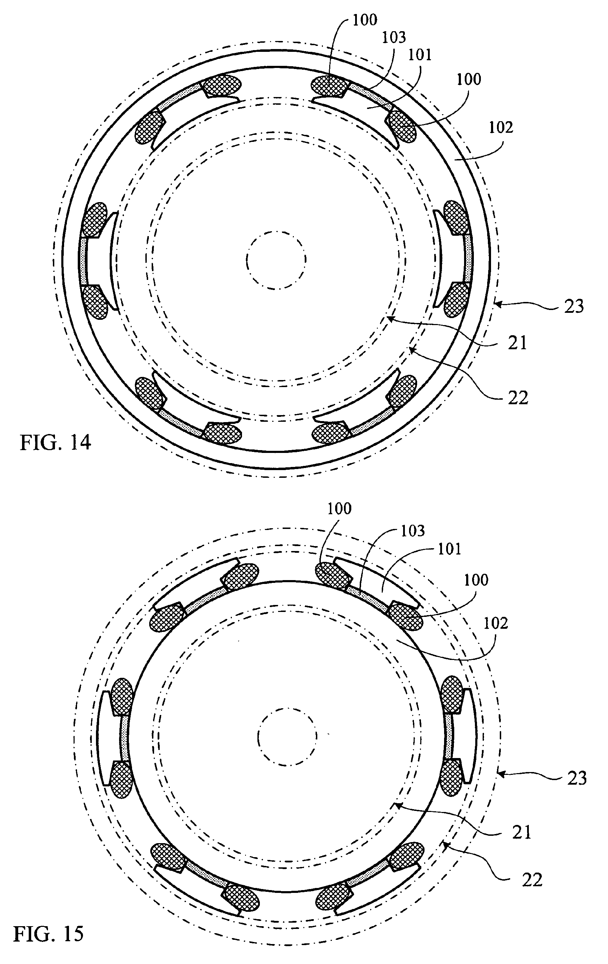

Fig. 14 is a schematic view showing a structure of the present invention applied in a coaxial 3-ring type electric machinery structure, wherein a PM magnetic pole indicating accumulative excitement sandwiched by a conduction winding excited individual magnetic pole and a magnetic circuit is disposed on an EME coupling aspect of the outer ring electric machinery structure in a direction facing the mid ring electric machinery structure to execute EME coupling with the mid ring electric machinery structure.
Fig. 15 is a schematic view showing a structure of the present invention applied in a coaxial 3-ring type electric machinery structure wherein a PM magnetic pole indicating accumulative excitement sandwiched by a conduction winding excited individual magnetic pole and a magnetic circuit is disposed on an EME coupling aspect of the mid ring electric machinery structure in a direction facing the outer ring electric machinery structure to execute EME coupling with the outer ring electric machinery structure.

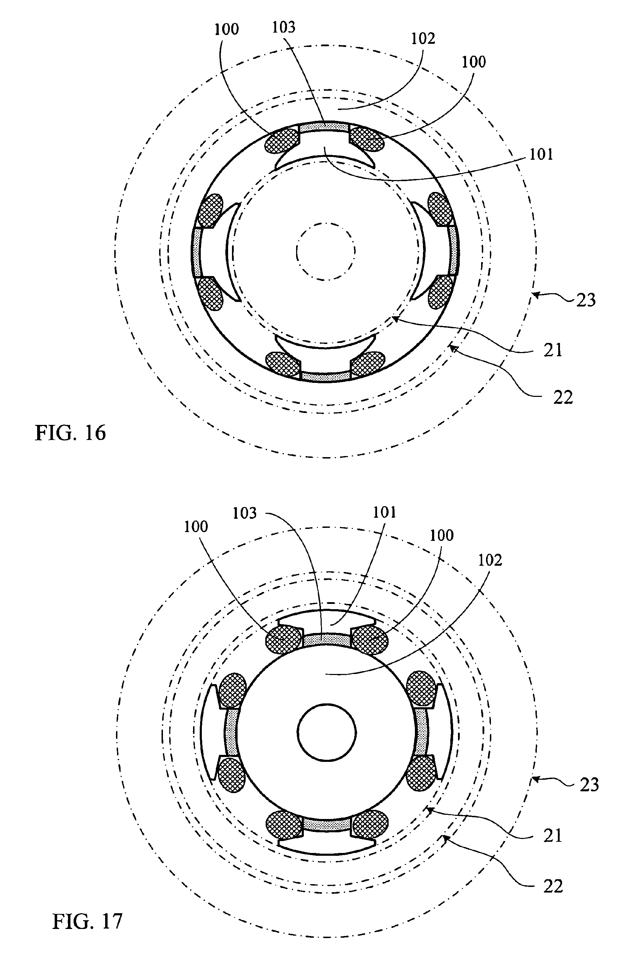

Fig. 16 is a schematic view showing a structure of the present invention applied in a coaxial 3-ring type electric machinery structure, wherein a PM magnetic pole indicating accumulative excitement sandwiched by a conduction winding excited individual magnetic pole and a magnetic circuit is disposed on an EME coupling aspect of the mid ring electric machinery structure in a direction facing the inner ring electric machinery structure to execute EME coupling with the inner ring electric machinery structure.
Fig. 17 is a schematic view showing a structure of the present invention applied in a coaxial 3-ring type electric machinery structure, wherein a PM magnetic pole indicating accumulative excitement sandwiched by a conduction winding excited individual magnetic pole and a magnetic circuit is disposed on an EME coupling aspect of the inner ring electric machinery structure in a direction facing the mid ring electric machinery structure.

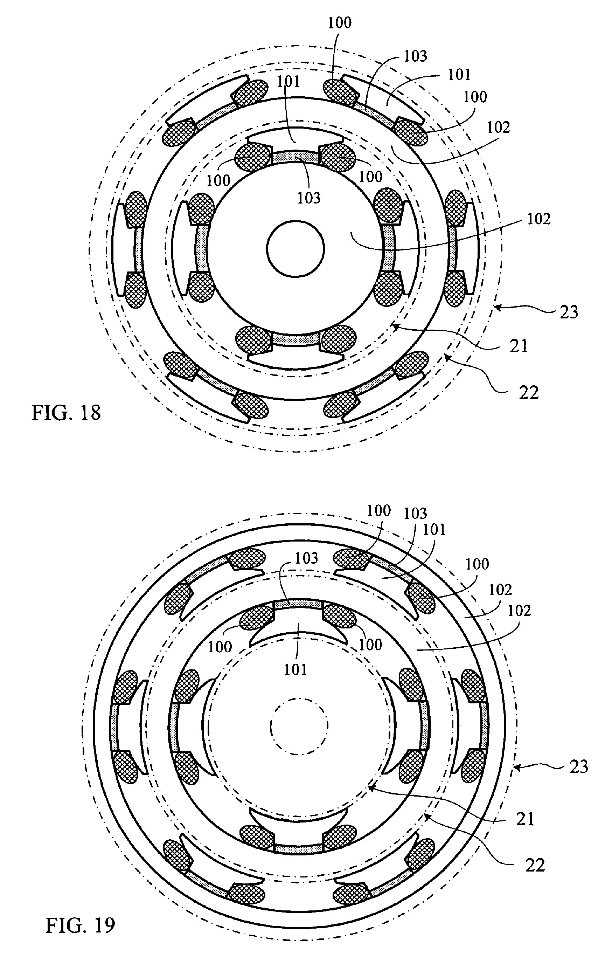

Fig. 18 is a schematic view showing a structure of the present invention applied in a coaxial 3-ring type electric machinery structure wherein two PM magnetic poles indicating accumulative excitement each sandwiched by a conduction winding excited individual magnetic pole and a magnetic circuit are respectively disposed on an EME coupling aspect of the inner ring electric machinery structure in a direction facing the mid ring electric machinery structure and on an EME coupling aspect of the mid ring electric machinery structure in a direction facing the outer ring electric machinery structure.
Fig. 19 is a schematic view showing a structure of the present invention applied in a coaxial 3-ring type electric machinery structure, wherein two PM magnetic poles indicating accumulative excitement each sandwiched by a conduction winding excited individual magnetic pole and a magnetic circuit are respectively disposed on an EME coupling aspect of the outer ring electric machinery structure in a direction facing the mid ring electric machinery structure and on an EME coupling aspect of the mid ring electric machinery structure in a direction facing the inner ring electric machinery structure.

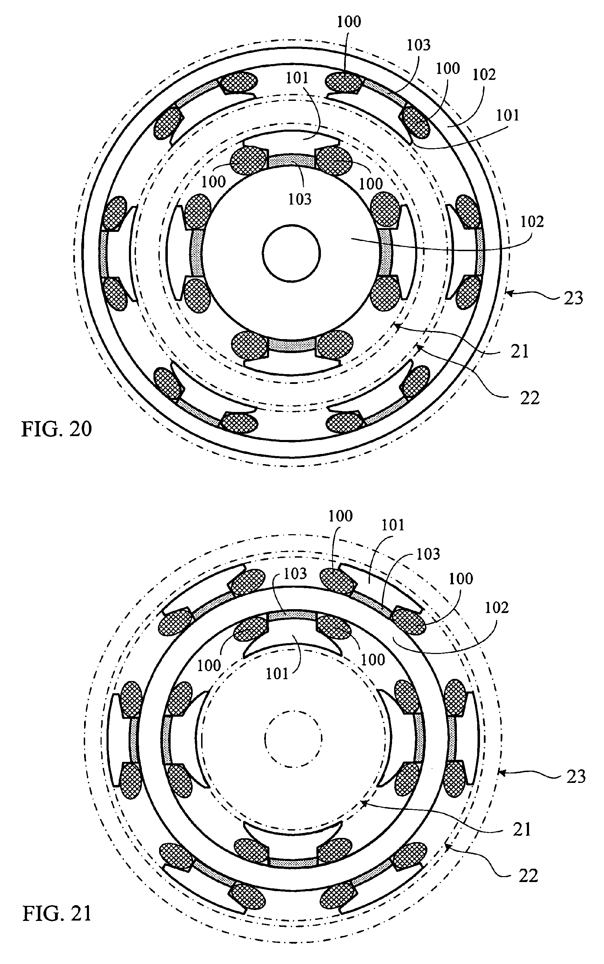

Fig. 20 is a schematic view showing a structure of the present invention applied in a coaxial 3-ring type electric machinery structure wherein two PM magnetic poles indicating accumulative excitement each sandwiched by a conduction winding excited individual magnetic pole and a magnetic circuit are respectively disposed on an EME coupling aspect of the outer ring electric machinery structure in a direction facing the mid ring electric machinery structure and on an EME coupling aspect of the inner ring electric machinery structure in a direction facing the mid ring electric machinery structure.
Fig. 21 is a schematic view showing a structure of the present invention applied in a coaxial 3-ring type electric machinery structure, wherein two PM magnetic poles indicating accumulative excitement each sandwiched by a conduction winding excited individual magnetic pole and a magnetic circuit are respectively disposed on two EME coupling aspects on both sides of the mid ring electric machinery structure respectively in a direction facing the outer ring electric machinery structure and in another direction facing the inner ring electric machinery structure to execute EME coupling with both the outer and the inner ring electric machinery structures.

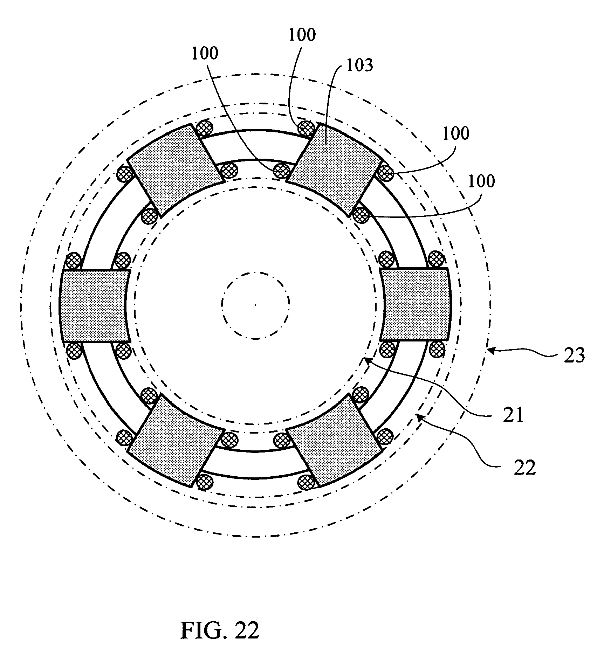

Fig. 22 is a schematic view showing a structure of the present invention applied in a coaxial 3-ring type electric machinery structure, wherein the mid ring electric machinery structure for executing EME coupling with the inner and the outer ring electric machinery structures is disposed with a PM magnetic pole provided with a conduction winding indicating accumulative excitement for executing bilateral coupling with the inner and the outer ring electric machinery structures to constitute a magnetic pole.

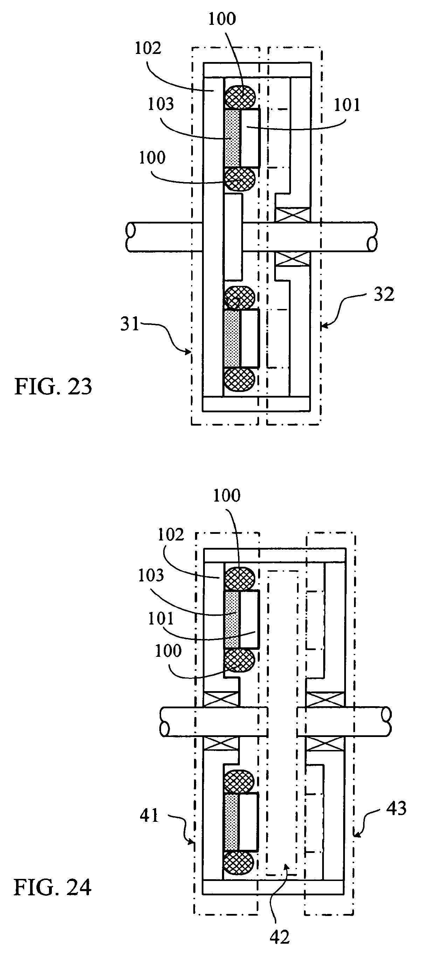

Fig. 23 is a schematic view showing a structure of the present invention applied in a double layer type plate electric machinery structure, wherein a PM magnetic pole indicating accumulative excitement sandwiched by a conduction winding excited individual magnetic pole and a magnetic circuit is disposed on an EME coupling aspect of the inner layer plate electric machinery structure.
Fig. 24 is a schematic view showing a structure of the present invention applied in a coaxial 3-layer type plate electric machinery structure, wherein a PM magnetic pole indicating accumulative excitement sandwiched by a conduction winding excited individual magnetic pole and a magnetic circuit is disposed on an EME coupling aspect of the inner layer plate electric machinery structure in a direction facing the mid layer plate electric machinery structure.

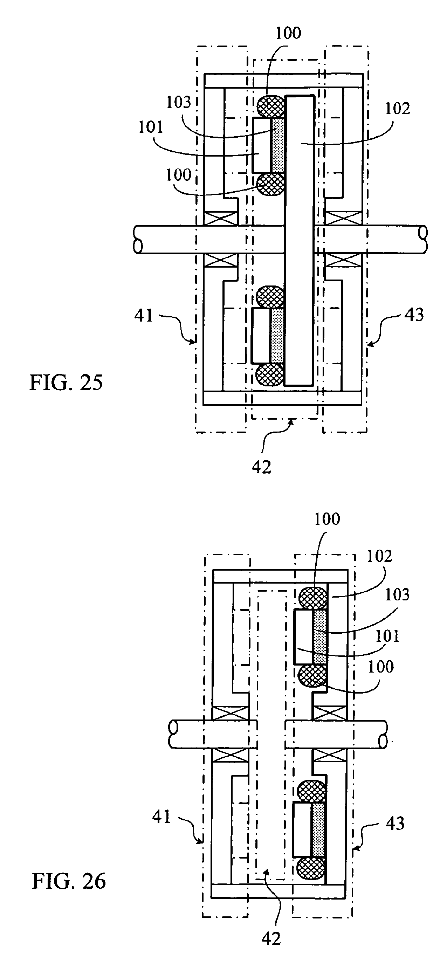

Fig. 25 is a schematic view showing a structure of the present invention applied in a coaxial 3-layer type plate electric machinery structure, wherein a PM magnetic pole indicating accumulative excitement sandwiched by a conduction winding excited individual magnetic pole and a magnetic circuit is disposed on an EME coupling aspect of the mid layer plate electric machinery structure in a direction facing the inner layer plate electric machinery structure.
Fig. 26 is a schematic view showing a structure of the present invention applied in a coaxial 3-layer type plate electric machinery structure, wherein a PM magnetic pole indicating accumulative excitement sandwiched by a conduction winding excited individual magnetic pole and a magnetic circuit is disposed on an EME coupling aspect of the outer layer plate electric machinery structure in a direction facing the mid layer plate electric machinery structure.

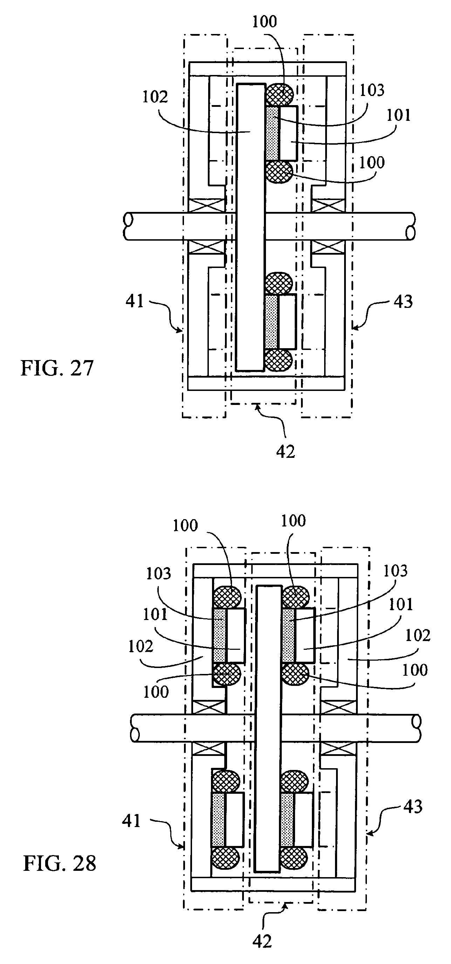

Fig. 27 is a schematic view showing a structure of the present invention applied in a coaxial 3-layer type plate electric machinery structure, wherein a PM magnetic pole indicating accumulative excitement sandwiched by a conduction winding excited individual magnetic pole and a magnetic circuit is disposed on an EME coupling aspect of the mid layer plate electric machinery structure in a direction facing the outer layer plate electric machinery structure.
Fig. 28 is a schematic view showing a structure of the present invention applied in a coaxial 3-layer type plate electric machinery structure, wherein two PM magnetic poles indicating accumulative excitement each sandwiched by a conduction winding excited individual magnetic pole and a magnetic circuit are respectively disposed on an EME coupling aspect of the inner layer plate electric machinery structure in a direction facing the mid layer plate electric machinery structure and on an EME coupling aspect of the mid layer plate electric machinery structure in a direction facing the outer layer plate electric machinery structure.

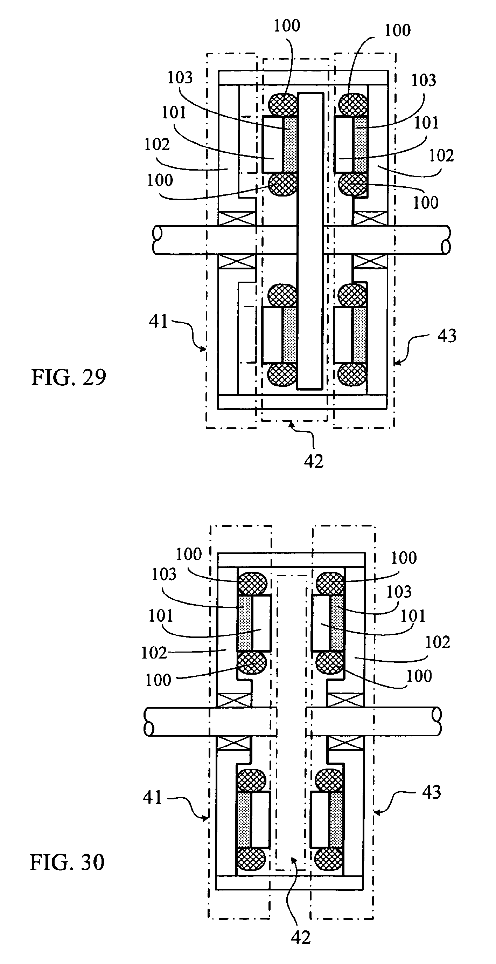

Fig. 29 is a schematic view showing a structure of the present invention applied in a coaxial 3-layer type plate electric machinery structure, wherein two PM magnetic poles indicating accumulative excitement each sandwiched by a conduction winding excited individual magnetic pole and a magnetic circuit are respectively disposed on an EME coupling aspect of the outer layer plate electric machinery structure in a direction facing the mid layer plate electric machinery structure and on an EME coupling aspect of the mid layer plate electric machinery structure in a direction facing the inner layer plate electric machinery structure.
Fig. 30 is a schematic view showing a structure of the present invention applied in a coaxial 3-layer type plate electric machinery structure, wherein two PM magnetic poles indicating accumulative excitement each sandwiched by a conduction winding excited individual magnetic pole and a magnetic circuit are respectively disposed on an EME coupling aspect of the outer layer plate electric machinery structure in a direction facing the mid layer plate electric machinery structure and on an EME coupling aspect of the inner layer plate electric machinery structure in a direction facing the mid layer plate electric machinery structure.

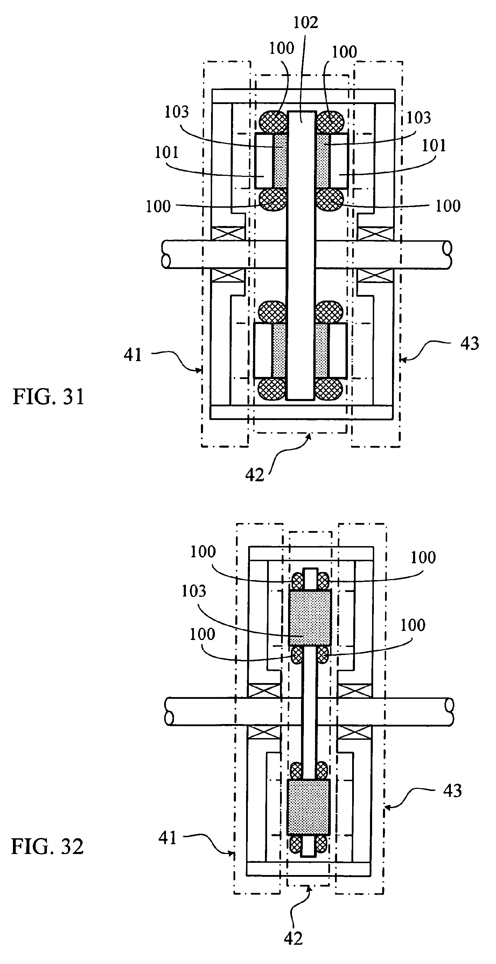

Fig. 31 is a schematic view showing a structure of the present invention applied in a coaxial 3-layer type plate electric machinery structure, wherein two PM magnetic poles indicating accumulative excitement each sandwiched by a conduction winding excited individual magnetic pole and a magnetic circuit are respectively disposed on two EME coupling aspects on both sides of the mid layer plate electric machinery structure in a direction facing the outer layer plate electric machinery structure and in another direction facing the inner layer plate electric machinery structure.
Fig. 32 is a schematic view showing a structure of the present invention applied in a coaxial 3-layer type plate electric machinery structure, wherein the mid layer plate electric machinery structure for executing EME coupling with the inner and the outer layer plate electric machinery structures is disposed with a PM magnetic pole provided with a conduction winding indicating accumulative excitement for executing bilateral coupling with the inner and the outer layer plate electric machinery structures to constitute a magnetic pole.

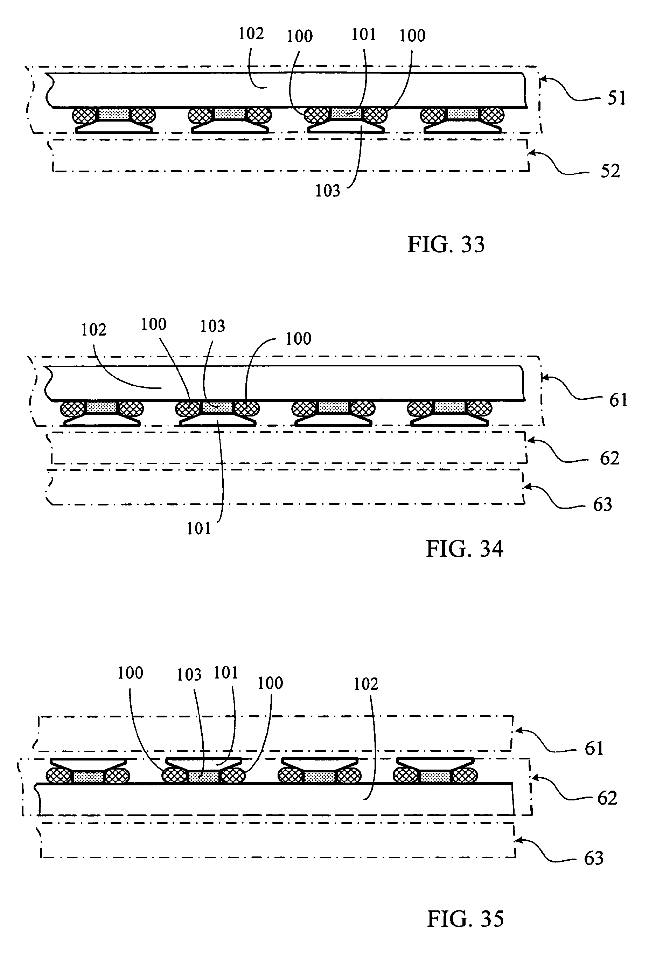

Fig. 33 is a schematic view showing a structure of the present invention applied in a linear, double layer type electric machinery structure, wherein a PM magnetic pole indicating accumulative excitement sandwiched by a conduction winding excited individual magnetic pole and a magnetic circuit is disposed on an EME coupling aspect of the inner layer linear electric machinery structure.
Fig. 34 is a schematic view showing a structure of the present invention applied in a 3-layer type plate electric machinery structure, wherein a PM magnetic pole indicating accumulative excitement sandwiched by a conduction winding excited individual magnetic pole and a magnetic circuit is disposed on an EME coupling aspect of the inner layer linear electric machinery structure in a direction facing the mid layer linear electric machinery structure.
Fig. 35 is a schematic view showing a structure of the present invention applied in a 3-layer type linear electric machinery structure, wherein a PM magnetic pole indicating accumulative excitement sandwiched by a conduction winding excited individual magnetic pole and a magnetic circuit is disposed on an EME coupling aspect of the mid layer linear electric machinery structure in a direction facing the inner layer linear electric machinery structure.

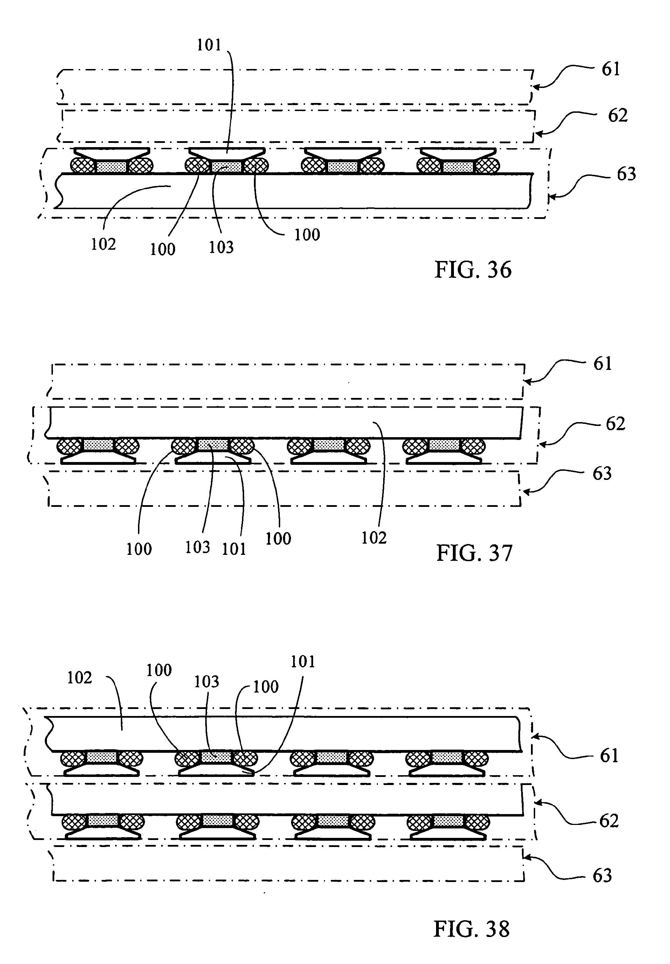

Fig. 36 is a schematic view showing a structure of the present invention applied in a 3-layer type linear electric machinery structure, wherein a PM magnetic pole indicating accumulative excitement sandwiched by a conduction winding excited individual magnetic pole and a magnetic circuit is disposed on an EME coupling aspect of the outer layer linear electric machinery structure in a direction facing the mid layer linear electric machinery structure.
Fig. 37 is a schematic view showing a structure of the present invention applied in a 3-layer type linear electric machinery structure, wherein a PM magnetic pole indicating accumulative excitement sandwiched by a conduction winding excited individual magnetic pole and a magnetic circuit is disposed on an EME coupling aspect of the mid layer linear electric machinery structure in a direction facing the outer layer linear electric machinery structure.
Fig. 38 is a schematic view showing a structure of the present invention applied in a 3-layer type linear electric machinery structure, wherein two PM magnetic poles indicating accumulative excitement each sandwiched by a conduction winding excited individual magnetic pole and a magnetic circuit are respectively disposed on an EME coupling aspect of the inner layer linear electric machinery structure in a direction facing the mid layer linear electric machinery structure and on an EME coupling aspect of the mid layer linear electric machinery structure in a direction facing the outer layer linear electric machinery structure.

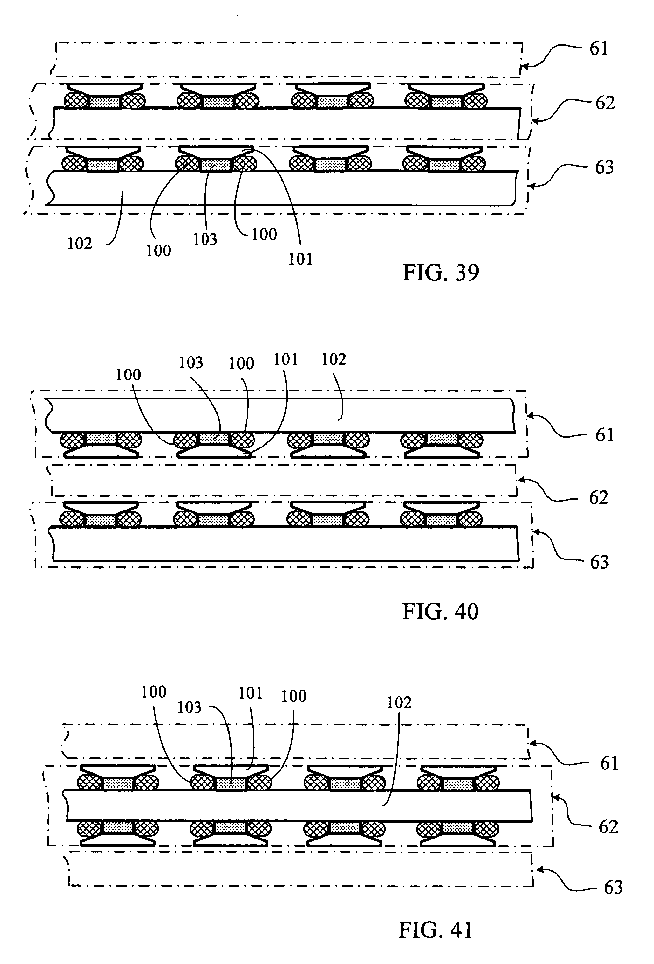

Fig. 39 is a schematic view showing a structure of the present invention applied in a 3-layer type linear electric machinery structure, wherein two PM magnetic poles indicating accumulative excitement each sandwiched by a conduction winding excited individual magnetic pole and a magnetic circuit are respectively disposed on an EME coupling aspect of the outer layer linear electric machinery structure in a direction facing the mid layer linear electric machinery structure and on an EME coupling aspect of the mid layer linear electric machinery structure in a direction facing the inner layer linear electric machinery structure.
Fig. 40 is a schematic view showing a structure of the present invention applied in a 3-layer type linear electric machinery structure, wherein an EME coupling aspect of the outer layer linear electric machinery structure and an EME coupling aspect of the inner layer linear electric machinery structure to respectively execute EME coupling with the mid layer linear electric machinery structure are each disposed with a PM magnetic pole indicating accumulative excitement sandwiched by a conduction winding excited individual magnetic pole and a magnetic circuit.
Fig. 41 is a schematic view showing a structure of the present invention applied in a 3-layer type linear electric machinery structure, wherein two PM magnetic poles indicating accumulative excitement sandwiched by a conduction winding excited individual magnetic pole and a magnetic circuit are respectively disposed on two EME coupling aspects on both sides of the mid layer linear electric machinery structure for executing EME coupling with both the outer layer linear electric machinery structure and the inner layer linear electric machinery structure.

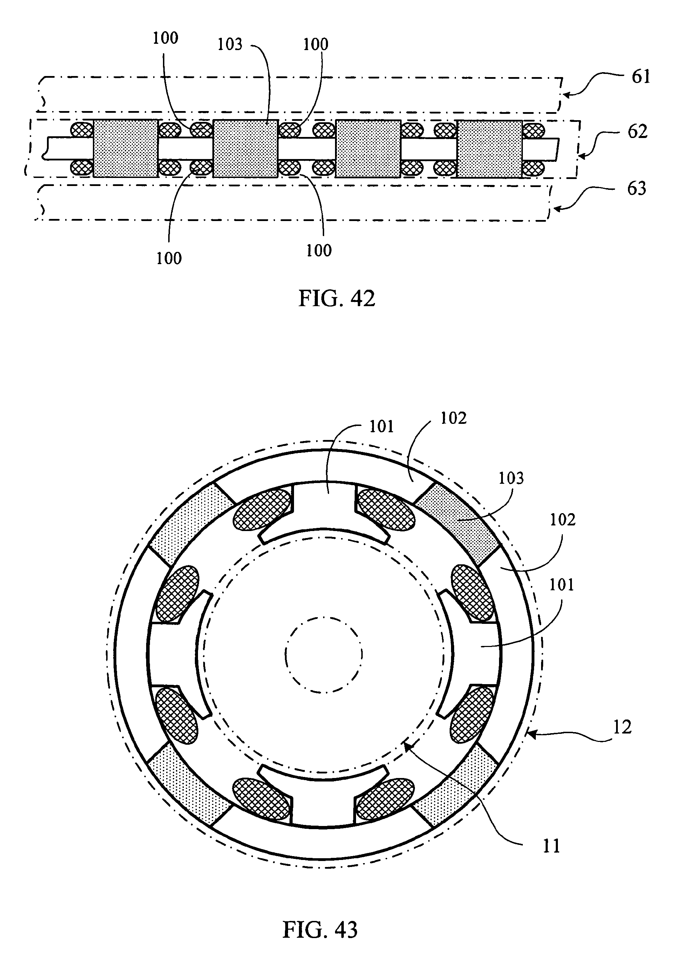

Fig. 42 is a schematic view showing a structure of the present invention applied in a 3-layer type linear electric machinery structure, wherein the mid layer linear electric machinery structure for executing EME coupling with the inner and the outer layer linear electric machinery structures is disposed with a PM magnetic pole provided with a conduction winding indicating accumulative excitement for executing bilateral coupling with the inner and the outer layer linear electric machinery structures to constitute a magnetic pole.
Fig. 43 is a schematic view showing that the present invention is applied in a structure having a PM magnetic pole sandwiched in a mid section of the magnetic circuit between conduction winding excited individual magnetic poles provided with different polarities.

### LISTING OF COMPONENT AND CORRESPONDING LABEL

- 100: conduction winding
- 101: magnetic pole
- 102: magnetic circuit
- 103: PM magnetic pole
- 1: inner layer electric machinery structure
- 2: outer layer electric machinery structure
- 3: armature
- 11: inner layer electric machinery structure of the cylinder electric machinery
- 12: outer layer electric machinery structure of the cylinder electric machinery
- 21: inner ring electric machinery structure of the coaxial 3-ring type electric machinery
- 22: mid ring electric machinery structure of the coaxial 3-ring type electric machinery
- 23: outer ring electric machinery structure of the coaxial 3-ring type electric machinery
- 31: inner layer plate electric machinery structure of the coaxial double layer type plate electric machinery
- 32: outer layer plate electric machinery structure of the coaxial double layer type plate electric machinery
- 41: inner layer plate electric machinery structure of the coaxial 3-layer type plate electric machinery
- 42: mid layer plate electric machinery structure of the coaxial 3-layer type plate electric machinery
- 43: outer layer plate electric machinery structure of the coaxial 3-layer type plate electric machinery
- 51: inner layer linear electric machinery structure of the linear double layer type electric machinery
- 52: outer layer linear electric machinery structure of the linear double layer type electric machinery
- 61: inner layer linear electric machinery structure of the linear 3-layer type electric machinery
- 62: mid layer linear electric machinery structure of the linear 3-layer type electric machinery
- 63: outer layer linear electric machinery structure of the linear 3-layer type electric machinery

### DETAILED DESCRIPTION OF THE PREFERRED EMBODIMENTS

The present invention discloses an electric machinery provided with a PM magnetic pole sandwiched in a conduction winding excited magnetic pole is characterized as having a PM magnetic pole 103 sandwiched by a conduction winding 100 excited magnetic pole 101 and a magnetic circuit 102 mounted in various types of the electric machinery of the prior art, and the magnetic pole 102 for mounting the magnetic pole and the magnetic pole 101 for disposing the conduction winding is comprised of a material of silicon steel, steel, or iron providing good permeability and made in an integral part or a stack of multiple sheets by lamination, or made by metallurgy from the dust of permeable material; a polar face of the magnetic pole 101 faces a structure of another electric machinery that interacts to execute EME; and the polar face of the magnetic pole 101 may be selected to indicate a convex, concave, or flat surface, or may be further disposed with a groove to indicate protrusion and indention pattern or a specific geometric form as applicable. The PM magnetic pole is disposed in the following methods:
1. The PM magnetic pole 103 is disposed to be sandwiched by a conduction winding 100 excited individual magnetic pole 101 and a magnetic circuit 102 mounted in various types of the electric machinery of the prior art, and wherein the relation of the polarity between the conduction winding 100 and the PM magnetic pole 103 indicates the electric machinery property of either accumulative excitement or differential excitement as illustrated in Fig. 2 for a schematic view showing a PM magnetic pole structure of the present invention applied in an individual magnetic pole sandwiched by a conduction winding excited individual magnetic pole and a magnetic circuit that is capable of indicating accumulative excitement for the conduction winding excited individual magnetic pole;
2. The PM magnetic pole 103 is disposed to be sandwiched in the mid section of the magnetic pole 101, for disposing the conduction excitement winding 100, and wherein the relation of the polarity between the conduction winding 100 and the PM magnetic pole 103 indicates the electric machinery property of either accumulative excitement or differential excitement as illustrated in Fig. 3 showing a PM magnetic pole structure of the present invention applied in an individual magnetic pole sandwiched by a conduction winding excited individual magnetic pole and a magnetic circuit that is capable of indicating differential excitement for the conduction winding excited individual magnetic pole;
3. The PM magnetic pole 103 is disposed to be mounted on or sandwiched by the mid section of the magnetic circuit 102 between the conduction winding 100 excited individual magnetic poles 101 with different polarity, and wherein the relation of the polarity between the conduction winding 100 and the PM magnetic pole 103 indicates the electric machinery property of either accumulative excitement or differential excitement as illustrated in Fig. 4 showing a PM magnetic pole structure of the present invention applied in an individual magnetic pole sandwiched in a mid section of a magnetic circuit that is capable of indicating accumulative excitement for each conduction winding excited individual magnetic pole of different polarities disposed on both ends of the magnetic circuit.

The electric machinery provided with a PM magnetic pole sandwiched by conduction winding excited magnetic poles of the present invention in the application of the commutator serial excitement or compounded excitement electric machinery to function as a motor or a generator, the conduction winding 100 and the armature 3 is in serial connection, thus by controlling the relation of the polarity between the conduction winding 100 and the PM magnetic pole 103 the corresponding electric machinery properties are as follows:
(1) When operating at the same revolving direction, the electric machinery operates under the electric machinery property of an accumulative excitement motor or an accumulative excitement generator; or
(2) When operating at the same revolving direction, the electric machinery operates under the electric machinery property of an accumulative excitement motor or a differential excitement generator; or
(3) When operating at the same revolving direction, the electric machinery operates under the electric machinery property of a differential excitement motor or an accumulative excitement generator; or
(4) When operating at the same revolving direction, the electric machinery operates under the electric machinery property of a differential excitement motor or a differential excitement generator; or
(5) When operating at opposite revolving direction, the electric machinery operates under the electric machinery property of an accumulative excitement motor or an accumulative excitement generator; or
(6) When operating at opposite revolving direction, the electric machinery operates under the electric machinery property of an accumulative excitement motor or a differential excitement generator; or
(7) When operating at opposite revolving direction, the electric machinery operates under the electric machinery property of a differential excitement motor or an accumulative excitement generator; or
(8) When operating at opposite revolving direction, the electric machinery operates under the electric machinery property of a differential excitement motor or a differential excitement generator.

The relation of polarity between the conduction winding 100 and the PM magnetic pole 103 of the electric machinery is controlled by one or more than one ways of operations as follows including:
(1) By means of changing the direction of electric current of the conduction winding 100 to change the relation of the polarity between the conduction winding 100 and the PM magnetic pole 103 to be accumulative excitement or differential excitement;
(2) By means of switching the poles between positive and negative of the DC to change the relation of the polarity between the conduction winding 100 and the PM magnetic pole 103 to be accumulative excitement or differential excitement;
(3) By means of changing both or one of the revolving directions of the generator and the motor to change the relation of the polarity between the conduction winding 100 and the PM magnetic pole 103 to be accumulative excitement or differential excitement;

Take an example as below:

As illustrated in Fig. 5 showing one of the embodiments of the present invention applied to function as a motor and a generator; when the electric machinery in the course of the operation, the arrows in the schematic drawing indicate the current direction, and more specifically, as illustrated in Fig. 5, the current direction of the real-line arrow shows the direction of inputted current when the electric machinery operates to function as a motor so that when current passes through the conduction winding 100 and the armature 3, the excited polarity and the PM magnetic pole 103 indicate a relation of accumulative excitement in the same polarity and the electric machinery operates under the property of an accumulative motor.

When the revolving direction of the electric machinery is constant and the electric machinery turns into functioning as a generator, the arrows of the dotted line in the schematic drawing show the direction of generated output current that when the generated output current passes through the conduction winding 100 and the armature 3, the excited polarity and the PM magnetic pole 103 indicate a relation of differential excitement in different polarity and the electric machinery operates under the property of a differential generator; other various controlled relations of the polarity between the conduction winding 100 and the PM magnetic pole 103 and the corresponding electric machinery property can be inferred using the same principle, therefore omitted here.

For example, ways of sandwiching the PM magnetic pole 103 in the electric machinery provided with a PM magnetic pole sandwiched by conduction winding excited magnetic poles of the present invention include using a mechanical locking member to clamp or secure, a screw and a nut structure to lock up, a rivet to secure, a pin and a pinhole structure to fix, or a packing means in proper size and selected geometric form to insert, a magnetic circuit structure to clamp, a casing to clamp, a dedicated structural member to clamp, an adhesion to bind the PM magnetic pole 103, or using any other means of the prior art to secure the PM magnetic pole 103.

Those four structural types may be applied in a DC or AC revolution electrical machinery or a linear electric machinery including commutator brush, brushless, ring brush, synchronous, asynchronous, internal revolving, external revolving, revolving at the middle of the electric machinery, double-acting, triple-acting, multi-layer type, multi-ring type, linear, DC brushless, or inverter electric machinery, or an electric machinery functioning as a generator or as a motor or as both a generator and a motor, coupling transmission device, as an EME vortex coupling transmission device, or an EME vortex braking device for functional operation.

The electric machinery provided with a PM magnetic pole sandwiched by conduction winding excited magnetic poles is disposed with a magnetic pole 101 to sandwich PM magnetic pole 103 jointly with the magnetic circuit 102; the magnetic circuit 102 or the magnetic pole 101 is comprised of a material of silicon steel, steel, or iron providing good permeability and made in an integral part or a stack of multiple sheets by lamination, or made by metallurgy from the dust of permeable material; a polar face of the magnetic pole 101 faces a structure of another electric machinery that interacts to execute EME; and the polar face of the magnetic pole 101 may be selected to indicate a convex, concave, or flat surface, or may be further disposed with a groove to indicate protrusion and indention pattern or a specific geometric form as applicable.

The electric machinery provided with a PM magnetic pole sandwiched by conduction winding excited magnetic poles by taking advantage of an innovative design of having a PM magnetic pole sandwiched by conduction winding excited individual magnetic poles is able to prevent the PM magnetic pole from falling off due to vibration and to prevent from weakening magnetic force by inverse excitement when the electric machinery is running.

Types of electric machinery for applying the electric machinery provided with a PM magnetic pole sandwiched by conduction winding excited magnetic poles of the present invention include:

1. A cylinder electric machinery in a construction comprised of an inner layer electric machinery structure and an outer layer electric machinery structure, comprises an inner layer electric machinery structure 11 and an outer layer electric machinery structure 12 as illustrated in Fig. 6 showing a summary profile of a structure of a main unit of a conduction device of the present invention applied in a cylinder electric machinery without casing, bearing, locking member, cooling van, and optional conductive device;

2. A coaxial 3-ring type electric machinery to engage in coaxial operation by insertion of an inner ring, a mid ring, and the outer ring electric machinery structures comprises the inner ring electric machinery structure 21, the mid ring electric machinery structure 22, and the outer ring electric machinery structure 23 as illustrated in Fig. 7 showing a summary profile of a structure of a main unit of a conduction device of the present invention applied in a coaxial 3-ring type electric machinery without casing, bearing, locking member, cooling van, and optional conductive device;

3. A coaxial double layer type plate electric machinery comprised of two layers of electric machinery structure laminated to engage in coaxial operation comprises the inner layer plate electric machinery structure 31 and the outer layer plate electric machinery structure 32 as illustrated in Fig. 8 showing a summary profile of a structure of a main unit of a conduction device of the present invention applied in a coaxial double layer type plate electric machinery without casing, bearing, locking member, cooling van, and optional conductive device;

4. A coaxial 3-layer type plate electric machinery comprised of an inner, a mid, and an outer layer electric machinery structures laminated to engage in coaxial operation comprises the inner layer plate electric machinery structure 41, the mid layer plate electric machinery structure 42, and the outer layer plate electric machinery structure 43 as illustrated in Fig. 9 showing a summary profile of a structure of a main unit of a conduction device of the present invention applied in a coaxial 3-layer type plate electric machinery without casing, bearing, locking member, cooling van, and optional conductive device;

5. A linearly coupled linear double layer type electric machinery comprised of two layers of linear electric machinery structures comprises the inner layer linear electric machinery structure 51 and the outer layer linear electric machinery structure 52 as illustrated in Fig. 10 showing a summary profile of a structure of a main unit of a conduction device of the present invention applied in a linear, double layer type electric machinery without casing, bearing, locking member, cooling van, and optional conductive device;

6. A linearly coupled linear 3-layer type electric machinery comprised of an inner layer, a mid layer, and the outer layer linear electric machinery structures includes the inner layer linear electric machinery structure 61, the mid layer linear electric machinery structure 62, and the outer layer linear electric machinery structure 63 as illustrated in Fig. 11 showing a summary profile of a structure of a main unit of a conduction device of the present invention applied in a linear, 3-layer type electric machinery without casing, bearing, locking member, cooling van, and optional conductive device.

Application examples of various types of structure of the present invention are described below, including 2-piece cylinder, plate or linear electric machinery structure and 3-piece coaxial 3-ring, coaxial 3-layer plate, or 3-layer linear electric machinery structure; an electric machinery structure comprised of other 2-piece, 3-piece, or more elements to execute EME interaction could be achieved according to the same operation principle, therefore it will not be elaborated herein.

Fig. 12 is a schematic view showing a structure of the present invention applied in a cylinder electric machinery structure, wherein a PM magnetic pole indicating accumulative excitement sandwiched by a conduction winding excited individual magnetic pole and a magnetic circuit is disposed on an EME coupling aspect of the outer layer electric machinery structure in a direction facing the inner layer electric machinery structure to execute EME coupling with the inner layer electric machinery structure.

As illustrated in Fig. 12 for a cylinder electric machinery structure, the outer layer electric machinery structure 12 to execute EME coupling with the inner layer electric machinery structure 11 has disposed on its EME coupling aspect in a direction facing the inner layer electric machinery structure 11 the PM magnetic pole 103 indicating accumulative excitement sandwiched either in the mid section of the magnetic circuit of the conduction winding 100 excited individual magnetic pole 101 or by the individual magnetic pole 101 and the magnetic circuit 102 thus to constitute the cylinder electric machinery provided with the PM magnetic pole 103 indicating accumulative excitement and being sandwiched by the conduction winding excited magnetic pole 101 and the magnetic circuit 102.

Fig. 13 is a schematic view showing a structure of the present invention applied in a cylinder electric machinery structure, wherein a PM magnetic pole indicating accumulative excitement sandwiched by a conduction winding excited individual magnetic pole and a magnetic circuit is disposed on an EME coupling aspect of the inner layer electric machinery structure in a direction facing the outer layer electric machinery structure to execute EME coupling with the outer layer electric machinery structure.

As illustrated in Fig. 13 showing a cylinder electric machinery structure, the PM magnetic pole 103 indicating accumulative excitement sandwiched either in the mid section of the magnetic circuit of a conduction winding 100 excited individual magnetic pole 101 or by the individual magnetic pole 101 and the magnetic circuit 102 is disposed on an EME coupling aspect of the inner layer electric machinery structure 11 in a direction facing the outer layer electric machinery structure 12 to execute EME coupling with the outer layer electric machinery structure 12 thus to constitute a cylinder electric machinery provided with the PM magnetic pole 103 indicating accumulative excitement and being sandwiched by the conduction winding excited magnetic pole 101 and the magnetic circuit 102.

Fig. 14 is a schematic view showing a structure of the present invention applied in a coaxial 3-ring type electric machinery structure, wherein a PM magnetic pole indicating accumulative excitement sandwiched by a conduction winding excited individual magnetic pole and a magnetic circuit is disposed on an EME coupling aspect of the outer ring electric machinery structure in a direction facing the mid ring electric machinery structure to execute EME coupling with the mid ring electric machinery structure.

As illustrated in Fig. 14 showing a coaxial 3-ring type electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the mid ring electric machinery structure 22 is disposed on an EME coupling aspect of the outer ring electric machinery structure 23 in a direction facing the mid ring electric machinery structure 22 for executing EME coupling with the mid ring electric machinery structure 22, and the type of the electric machinery structure between the mid ring electric machinery structure 22 and the inner ring electric machinery structure 21 is selected upon its EME property thus to constitute a coaxial 3-ring type electric machinery provided with the PM magnetic pole 103 indicating accumulative excitement and being sandwiched by the conduction winding excited magnetic pole 101 and the magnetic circuit 102.

Fig. 15 is a schematic view showing a structure of the present invention applied in a coaxial 3-ring type electric machinery structure, wherein a PM magnetic pole indicating accumulative excitement sandwiched by a conduction winding excited individual magnetic pole and a magnetic circuit is disposed on an EME coupling aspect of the mid ring electric machinery structure in a direction facing the outer ring electric machinery structure to execute EME coupling with the outer ring electric machinery structure.

As illustrated in Fig. 15 showing a coaxial 3-ring type electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the outer ring electric machinery structure 23 is disposed on an EME coupling aspect of the mid ring electric machinery structure 22 in a direction facing the outer ring electric machinery structure 23 for executing EME coupling with the outer ring electric machinery structure 23, and the type of the electric machinery structure between the mid ring electric machinery structure 22 and the inner ring electric machinery structure 21 is selected upon its EME property thus to constitute a coaxial 3-ring type electric machinery provided with the PM magnetic pole 103 indicating accumulative excitement and being sandwiched by the conduction winding excited magnetic pole 101 and the magnetic circuit 102.

Fig. 16 is a schematic view showing a structure of the present invention applied in a coaxial 3-ring type electric machinery structure, wherein a PM magnetic pole indicating accumulative excitement sandwiched by a conduction winding excited individual magnetic pole and a magnetic circuit is disposed on an EME coupling aspect of the mid ring electric machinery structure in a direction facing the inner ring electric machinery structure to execute EME coupling with the inner ring electric machinery structure.

As illustrated in Fig. 16 showing a coaxial 3-ring type electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the inner ring electric machinery structure 21 is disposed on an EME coupling aspect of the mid ring electric machinery structure 22 in a direction facing the inner ring electric machinery structure 21 for executing EME coupling with the inner ring electric machinery structure 21, and the type of the electric machinery structure between the mid ring electric machinery structure 22 and the outer ring electric machinery structure 23 is selected upon its EME property thus to constitute a coaxial 3-ring type electric machinery provided with the PM magnetic pole 103 indicating accumulative excitement and being sandwiched by the conduction winding excited magnetic pole 101 and the magnetic circuit 102.

Fig. 17 is a schematic view showing a structure of the present invention applied in a coaxial 3-ring type electric machinery structure, wherein a PM magnetic pole indicating accumulative excitement sandwiched by a conduction winding excited individual magnetic pole and a magnetic circuit is disposed on an EME coupling aspect of the inner ring electric machinery structure in a direction facing the mid ring electric machinery structure.

As illustrated in Fig. 17 showing a coaxial 3-ring type electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the mid ring electric machinery structure 22 is disposed on an EME coupling aspect of the inner ring electric machinery structure 21 in a direction facing the mid ring electric machinery structure 22 for executing EME coupling with the mid ring electric machinery structure 22, and the type of the electric machinery structure between the mid ring electric machinery structure 22 and the outer ring electric machinery structure 23 is selected upon its EME property thus to constitute a coaxial 3-ring type electric machinery provided with the PM magnetic pole 103 indicating accumulative excitement and being sandwiched by the conduction winding excited magnetic pole 101 and the magnetic circuit 102.

Fig. 18 is a schematic view showing a structure of the present invention applied in a coaxial 3-ring type electric machinery structure wherein two PM magnetic poles indicating accumulative excitement each sandwiched by a conduction winding excited individual magnetic pole and a magnetic circuit are respectively disposed on an EME coupling aspect of the inner ring electric machinery structure in a direction facing the mid ring electric machinery structure and on an EME coupling aspect of the mid ring electric machinery structure in a direction facing the outer ring electric machinery structure.

As illustrated in Fig. 18 showing a coaxial 3-ring type electric machinery structure, an EME coupling aspect of the inner ring electric machinery structure 21 in a direction facing the mid ring electric machinery structure 22 and an EME coupling aspect of the mid ring electric machinery structure 22 in a direction facing the outer ring electric machinery structure 23 are each disposed with a PM magnetic pole 103 indicating accumulative excitement sandwiched either in the mid section of the magnetic circuit of the conduction winding excited individual magnetic pole 101 or by the individual magnetic pole 101 and the magnetic circuit 102 thus to constitute a coaxial 3-ring type electric machinery provided with two PM magnetic poles 103 indicating accumulative excitement and being sandwiched by the conduction winding excited magnetic pole 101 and the magnetic circuit 102.

Fig. 19 is a schematic view showing a structure of the present invention applied in a coaxial 3-ring type electric machinery structure wherein two PM magnetic poles indicating accumulative excitement each sandwiched by a conduction winding excited individual magnetic pole and a magnetic circuit are respectively disposed on an EME coupling aspect of the outer ring electric machinery structure in a direction facing the mid ring electric machinery structure and on an EME coupling aspect of the mid ring electric machinery structure in a direction facing the inner ring electric machinery structure.

As illustrated in Fig. 19 showing a coaxial 3-ring type electric machinery structure, an EME coupling aspect of the outer ring electric machinery structure 23 in a direction facing the mid ring electric machinery structure 22 and an EME coupling aspect of the mid ring electric machinery structure 22 in a direction facing the inner ring electric machinery structure 21 are each disposed with a PM magnetic pole 103 indicating accumulative excitement sandwiched either in the mid section of the magnetic circuit of the conduction winding excited individual magnetic pole 101 or by the individual magnetic pole 101 and the magnetic circuit 102 thus to constitute a coaxial 3-ring type electric machinery provided with two PM magnetic poles 103 indicating accumulative excitement and being sandwiched by the conduction winding excited magnetic pole 101 and the magnetic circuit 102.

Fig. 20 is a schematic view showing a structure of the present invention applied in a coaxial 3-ring type electric machinery structure wherein two PM magnetic poles indicating accumulative excitement each sandwiched by a conduction winding excited individual magnetic pole and a magnetic circuit are respectively disposed on an EME coupling aspect of the outer ring electric machinery structure in a direction facing the mid ring electric machinery structure and on an EME coupling aspect of the inner ring electric machinery structure in a direction facing the mid ring electric machinery structure.

As illustrated in Fig. 20 showing a coaxial 3-ring type electric machinery structure, an EME coupling aspect of the outer ring electric machinery structure 23 in a direction facing the mid ring electric machinery structure 22 and an EME coupling aspect of the inner ring electric machinery structure 21 in a direction facing the mid ring electric machinery structure 22 are each disposed with a PM magnetic pole 103 indicating accumulative excitement sandwiched either in the mid section of the magnetic circuit of the conduction winding excited individual magnetic pole 101 or by the individual magnetic pole 101 and the magnetic circuit 102 thus to constitute a coaxial 3-ring type electric machinery provided with two PM magnetic poles 103 with each indicating accumulative excitement and being sandwiched by the conduction winding excited magnetic pole 101 and the magnetic circuit 102.

Fig. 21 is a schematic view showing a structure of the present invention applied in a coaxial 3-ring type electric machinery structure, wherein two PM magnetic poles indicating accumulative excitement each sandwiched by a conduction winding excited individual magnetic pole and a magnetic circuit are respectively disposed on two EME coupling aspects on both sides of the mid ring electric machinery structure respectively in a direction facing the outer ring electric machinery structure and in another direction facing the inner ring electric machinery structure to execute EME coupling with both the outer and the inner ring electric machinery structures.

As illustrated in Fig. 21 showing a coaxial 3-ring type electric machinery structure, two PM magnetic poles 103 indicating accumulative excitement sandwiched either in the mid section of the magnetic circuit of the conduction winding excited individual magnetic pole 101 or by the individual magnetic pole 101 and the magnetic circuit 102 are respectively disposed on two EME coupling aspects of the mid ring electric machinery structure 22 in a direction facing the inner ring electric machinery structure 21 and in another direction facing the outer ring electric machinery structure 23 to execute EME coupling with both the outer and the inner ring electric machinery structures 23 and 21 thus to constitute a coaxial 3-ring type electric machinery provided with the PM magnetic pole 103 indicating accumulative excitement and being sandwiched by the conduction winding excited magnetic pole 101 and the magnetic circuit 102.

Fig. 22 is a schematic view showing a structure of the present invention applied in a coaxial 3-ring type electric machinery structure, wherein the mid ring electric machinery structure for executing EME coupling with the inner and the outer ring electric machinery structures is disposed with a PM magnetic pole provided with a conduction winding indicating accumulative excitement for executing bilateral coupling with the inner and the outer ring electric machinery structures to constitute a magnetic pole.

As illustrated in Fig. 22 showing a coaxial 3-ring type electric machinery structure, the mid ring electric machinery structure 22 for executing EME coupling with both the inner ring electric machinery structure 21 and the outer ring electric machinery structure 23 is disposed with a PM magnetic pole 103 to constitute a magnetic pole, and the magnetic poles on both ends of the PM magnetic pole 103 execute bilateral coupling with the inner ring electric machinery structure 21 and the outer ring electric machinery structure 23 respectively to achieve EME interaction, and a conduction excitement winding 100 is wound at the PM magnetic pole 103 thus further constituting a coaxial 3-ring type electric machinery with the winding indicating accumulative excitement wound at the PM magnetic pole 103.

Fig. 23 is a schematic view showing a structure of the present invention applied in a double layer type plate electric machinery structure, wherein a PM magnetic pole indicating accumulative excitement sandwiched by a conduction winding excited individual magnetic pole and a magnetic circuit is disposed on an EME coupling aspect of the inner layer plate electric machinery structure.

As illustrated in Fig. 23 showing a double layer type plate electric machinery structure, the PM magnetic pole 103 indicating accumulative excitement sandwiched either in the mid section of the magnetic circuit of the conduction winding individual magnetic pole 101 or by the individual magnetic pole 101 and the magnetic circuit 102 to execute EME interaction with the outer layer plate electric machinery structure 32 is disposed on an EME coupling aspect of the inner layer plate electric machinery structure 31 in a direction facing the outer layer plate electric machinery structure 32, or the PM magnetic pole 103 indicating accumulative excitement sandwiched either in the mid section of the magnetic circuit of the conduction winding individual magnetic pole 101 or by the individual magnetic pole 101 and the magnetic circuit 102 to execute EME interaction with the inner layer plate electric machinery structure 31 is disposed on an EME coupling aspect of the outer layer plate electric machinery structure 32 in a direction facing the inner layer plate electric machinery structure 31 thus to constitute a coaxial double layer type plate electric machinery provided with a PM magnetic pole 103 indicating accumulative excitement and being sandwiched by the conduction winding excited magnetic pole 101 and the magnetic circuit 102.

Fig. 24 is a schematic view showing a structure of the present invention applied in a coaxial 3-layer type plate electric machinery structure, wherein a PM magnetic pole indicating accumulative excitement sandwiched by a conduction winding excited individual magnetic pole and a magnetic circuit is disposed on an EME coupling aspect of the inner layer plate electric machinery structure in a direction facing the mid layer plate electric machinery structure.

As illustrated in Fig. 24 showing a coaxial 3-layer type plate electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the mid layer plate electric machinery structure 42 is disposed on an EME coupling aspect of the inner layer plate electric machinery structure 41 in a direction facing the mid layer plate electric machinery structure 42, and the type of the electric machinery structure between the mid layer plate electric machinery structure 42 and the outer layer plate electric machinery structure 43 is selected upon its EME property to constitute a 3-layer type plate electric machinery provided with the PM magnetic pole 103 indicating accumulative excitement and being sandwiched by the conduction winding excited magnetic pole 101 and the magnetic circuit 102.

Fig. 25 is a schematic view showing a structure of the present invention applied in a coaxial 3-layer type plate electric machinery structure, wherein a PM magnetic pole indicating accumulative excitement sandwiched by a conduction winding excited individual magnetic pole and a magnetic circuit is disposed on an EME coupling aspect of the mid layer plate electric machinery structure in a direction facing the inner layer plate electric machinery structure.

As illustrated in Fig. 25 showing a coaxial 3-layer type plate electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the inner layer plate electric machinery structure 41 is disposed on an EME coupling aspect of the mid layer plate electric machinery structure 42 in a direction facing the inner layer plate electric machinery structure 41, and the type of the electric machinery structure between the mid layer plate electric machinery structure 42 and the outer layer plate electric machinery structure 43 is selected upon its EME property to constitute a 3-layer type plate electric machinery provided with the PM magnetic pole 103 indicating accumulative excitement and being sandwiched by the conduction winding excited magnetic pole 101 and the magnetic circuit 102.

Fig. 26 is a schematic view showing a structure of the present invention applied in a coaxial 3-layer type plate electric machinery structure, wherein a PM magnetic pole indicating accumulative excitement sandwiched by a conduction winding excited individual magnetic pole and a magnetic circuit is disposed on an EME coupling aspect of the outer layer plate electric machinery structure in a direction facing the mid layer plate electric machinery structure.

As illustrated in Fig. 26 showing a coaxial 3-layer type plate electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the mid layer plate electric machinery structure 42 is disposed on an EME coupling aspect of the outer layer plate electric machinery structure 43 in a direction facing the mid layer plate electric machinery structure 42, and the type of the electric machinery structure between the mid layer plate electric machinery structure 42 and the inner layer plate electric machinery structure 41 is selected upon its EME property to constitute a 3-layer type plate electric machinery provided with the PM magnetic pole 103 indicating accumulative excitement and being sandwiched by the conduction winding excited magnetic pole 101 and the magnetic circuit 102.

Fig. 27 is a schematic view showing a structure of the present invention applied in a coaxial 3-layer type plate electric machinery structure, wherein a PM magnetic pole indicating accumulative excitement sandwiched by a conduction winding excited individual magnetic pole and a magnetic circuit is disposed on an EME coupling aspect of the mid layer plate electric machinery structure in a direction facing the outer layer plate electric machinery structure.

As illustrated in Fig. 27 showing a coaxial 3-layer type plate electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the outer layer plate electric machinery structure 43 is disposed on an EME coupling aspect of the mid layer plate electric machinery structure 42 in a direction facing the outer layer plate electric machinery structure 43, and the type of the electric machinery structure between the mid layer plate electric machinery structure 42 and the inner layer plate electric machinery structure 41 is selected upon its EME property to constitute a 3-layer type plate electric machinery provided with the PM magnetic pole 103 indicating accumulative excitement and being sandwiched by the conduction winding excited magnetic pole 101 and the magnetic circuit 102.

Fig. 28 is a schematic view showing a structure of the present invention applied in a coaxial 3-layer type plate electric machinery structure, wherein two PM magnetic poles indicating accumulative excitement each sandwiched by a conduction winding excited individual magnetic pole and a magnetic circuit are respectively disposed on an EME coupling aspect of the inner layer plate electric machinery structure in a direction facing the mid layer plate electric machinery structure and on an EME coupling aspect of the mid layer plate electric machinery structure in a direction facing the outer layer plate electric machinery structure.

As illustrated in Fig. 28 showing a coaxial 3-layer type plate electric machinery structure, an EME coupling aspect of the inner layer plate electric machinery structure 41 in a direction facing the mid layer plate electric machinery structure 42 and an EME coupling aspect of the mid layer plate electric machinery structure 42 in a direction facing the outer layer plate electric machinery structure 43 are each disposed with a PM magnetic pole 103 indicating accumulative excitement sandwiched either in the mid section of the magnetic circuit of the conduction winding excited individual magnetic pole 101 or by the individual magnetic pole 101 and the magnetic circuit 102 thus to constitute a coaxial 3-layer type plate electric machinery provided with two PM magnetic poles 103 indicating accumulative excitement and being sandwiched by the conduction winding excited magnetic pole 101 and the magnetic circuit 102.

Fig. 29 is a schematic view showing a structure of the present invention applied in a coaxial 3-layer type plate electric machinery structure, wherein two PM magnetic poles indicating accumulative excitement each sandwiched by a conduction winding excited individual magnetic pole and a magnetic circuit are respectively disposed on an EME coupling aspect of the outer layer plate electric machinery structure in a direction facing the mid layer plate electric machinery structure and on an EME coupling aspect of the mid layer plate electric machinery structure in a direction facing the inner layer plate electric machinery structure.

As illustrated in Fig. 29 showing a coaxial 3-layer type plate electric machinery structure, an EME coupling aspect of the outer layer plate electric machinery structure 43 in a direction facing the mid layer plate electric machinery structure 42 and an EME coupling aspect of the mid layer plate electric machinery structure 42 in a direction facing the inner layer plate electric machinery structure 41 are each disposed with a PM magnetic pole 103 indicating accumulative excitement sandwiched either in the mid section of the magnetic circuit of the conduction winding excited individual magnetic pole 101 or by the individual magnetic pole 101 and the magnetic circuit 102 thus to constitute a coaxial 3-layer type plate electric machinery provided with two PM magnetic poles 103 indicating accumulative excitement and being sandwiched by the conduction winding excited magnetic pole 101 and the magnetic circuit 102.

Fig. 30 is a schematic view showing a structure of the present invention applied in a coaxial 3-layer type plate electric machinery structure wherein two PM magnetic poles indicating accumulative excitement each sandwiched by a conduction winding excited individual magnetic pole and a magnetic circuit are respectively disposed on an EME coupling aspect of the outer layer plate electric machinery structure in a direction facing the mid layer plate electric machinery structure and on an EME coupling aspect of the inner layer plate electric machinery structure in a direction facing the mid layer plate electric machinery structure.

As illustrated in Fig. 30 showing a coaxial 3-layer type plate electric machinery structure, an EME coupling aspect of the outer layer plate electric machinery structure 43 in a direction facing the mid layer plate electric machinery structure 42 and an EME coupling aspect of the inner layer plate electric machinery structure 41 in a direction facing the mid layer plate electric machinery structure 42 are each disposed with a PM magnetic pole 103 indicating accumulative excitement sandwiched either in the mid section of the magnetic circuit of the conduction winding excited individual magnetic pole 101 or by the individual magnetic pole 101 and the magnetic circuit 102 to achieve EME interaction with the mid layer plate electric machinery structure 42 thus to constitute a coaxial 3-layer type plate electric machinery provided with two PM magnetic poles 103 with each indicating accumulative excitement and being sandwiched by the conduction winding excited magnetic pole 101 and the magnetic circuit 102.

Fig. 31 is a schematic view showing a structure of the present invention applied in a coaxial 3-layer type plate electric machinery structure, wherein two PM magnetic poles indicating accumulative excitement each sandwiched by a conduction winding excited individual magnetic pole and a magnetic circuit are respectively disposed on two EME coupling aspects on both sides of the mid layer plate electric machinery structure in a direction facing the outer layer plate electric machinery structure and in another direction facing the inner layer plate electric machinery structure.

As illustrated in Fig. 31 showing a coaxial 3-layer type plate electric machinery structure, two PM magnetic poles 103 indicating accumulative excitement sandwiched either in the mid section of the magnetic circuit of the conduction winding excited individual magnetic pole 101 or by the individual magnetic pole 101 and the magnetic circuit 102 are respectively disposed on two EME coupling aspects of the mid layer plate electric machinery structure 42 in a direction facing the inner layer plate electric machinery structure 41 and in another direction facing the outer layer plate electric machinery structure 43 to execute EME coupling with both the outer and the inner layer plate electric machinery structures 43 and 41 thus to constitute a coaxial 3-layer type plate electric machinery provided with the PM magnetic pole 103 indicating accumulative excitement and being sandwiched by the conduction winding excited magnetic pole 101 and the magnetic circuit 102.

Fig. 32 is a schematic view showing a structure of the present invention applied in a coaxial 3-layer type plate electric machinery structure, wherein the mid layer plate electric machinery structure for executing EME coupling with the inner and the outer layer plate electric machinery structures is disposed with a PM magnetic pole provided with a conduction winding indicating accumulative excitement for executing bilateral coupling with the inner and the outer layer plate electric machinery structures to constitute a magnetic pole.

As illustrated in Fig. 32 showing a coaxial 3-layer type plate electric machinery structure, wherein the mid layer plate electric machinery structure 42 for executing EME coupling with both the inner layer plate electric machinery structure 41 and the outer layer plate electric machinery structure 43 is disposed with a PM magnetic pole 103 to constitute a magnetic pole, and the magnetic poles on both ends of the PM magnetic pole 103 execute bilateral coupling with the inner layer plate electric machinery structure 41 and the outer layer plate electric machinery structure 43 respectively to achieve EME interaction, and a conduction excitement winding 100 is wound at the PM magnetic pole 103 thus further constituting a coaxial 3-layer type plate electric machinery with the winding indicating accumulative excitement wound at the PM magnetic pole 103.

Fig. 33 is a schematic view showing a structure of the present invention applied in a double layer type linear electric machinery structure, wherein a PM magnetic pole indicating accumulative excitement sandwiched by a conduction winding excited individual magnetic pole and a magnetic circuit is disposed on an EME coupling aspect of the inner layer linear electric machinery structure.

As illustrated in Fig. 33 showing a double layer type linear electric machinery structure, the PM magnetic pole 103 indicating accumulative excitement sandwiched either in the mid section of the magnetic circuit of the conduction winding individual magnetic pole 101 or by the individual magnetic pole 101 and the magnetic circuit 102 to execute EME interaction with the outer layer linear electric machinery structure 52 is disposed on an EME coupling aspect of the inner layer linear electric machinery structure 51 in a direction facing the outer layer linear electric machinery structure 52, or the PM magnetic pole 103 indicating accumulative excitement sandwiched either in the mid section of the magnetic circuit of the conduction winding individual magnetic pole 101 or by the individual magnetic pole 101 and the magnetic circuit 102 to execute EME interaction with the inner layer linear electric machinery structure 51 is disposed on an EME coupling aspect of the outer layer linear electric machinery structure 52 in a direction facing the inner layer linear electric machinery structure 51 thus to constitute a double layer type linear electric machinery provided with a PM magnetic pole 103 indicating accumulative excitement and being sandwiched by the conduction winding excited magnetic pole 101 and the magnetic circuit 102.

Fig. 34 is a schematic view showing a structure of the present invention applied in a 3-layer type linear electric machinery structure, wherein a PM magnetic pole indicating accumulative excitement sandwiched by a conduction winding excited individual magnetic pole and a magnetic circuit is disposed on an EME coupling aspect of the inner layer linear electric machinery structure in a direction facing the mid layer linear electric machinery structure.

As illustrated in Fig. 34 showing a 3-layer type linear electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the mid layer linear electric machinery structure 62 is disposed on an EME coupling aspect of the inner layer linear electric machinery structure 61 in a direction facing the mid layer linear electric machinery structure 62, and the type of the electric machinery structure between the mid layer linear electric machinery structure 62 and the outer layer linear electric machinery structure 63 is selected upon its EME property to constitute a 3-layer type linear electric machinery provided with the PM magnetic pole 103 indicating accumulative excitement and being sandwiched by the conduction winding excited magnetic pole 101 and the magnetic circuit 102.

Fig. 35 is a schematic view showing a structure of the present invention applied in a 3-layer type linear electric machinery structure, wherein a PM magnetic pole indicating accumulative excitement sandwiched by a conduction winding excited individual magnetic pole and a magnetic circuit is disposed on an EME coupling aspect of the mid layer linear electric machinery structure in a direction facing the inner layer linear electric machinery structure.

As illustrated in Fig. 35 showing a 3-layer type linear electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the inner layer linear electric machinery structure 61 is disposed on an EME coupling aspect of the mid layer linear electric machinery structure 62 in a direction facing the inner layer linear electric machinery structure 61, and the type of the electric machinery structure between the mid layer linear electric machinery structure 62 and the outer layer linear electric machinery structure 63 is selected upon its EME property to constitute a 3-layer type linear electric machinery provided with the PM magnetic pole 103 indicating accumulative excitement and being sandwiched by the conduction winding excited magnetic pole 101 and the magnetic circuit 102.

Fig. 36 is a schematic view showing a structure of the present invention applied in a 3-layer type linear electric machinery structure, wherein a PM magnetic pole indicating accumulative excitement sandwiched by a conduction winding excited individual magnetic pole and a magnetic circuit is disposed on an EME coupling aspect of the outer layer linear electric machinery structure in a direction facing the mid layer linear electric machinery structure.

As illustrated in Fig. 36 showing a 3-layer type linear electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the mid layer linear electric machinery structure 62 is disposed on an EME coupling aspect of the outer layer linear electric machinery structure 63 in a direction facing the mid layer linear electric machinery structure 62, and the type of the electric machinery structure between the mid layer linear electric machinery structure 62 and the inner layer linear electric machinery structure 61 is selected upon its EME property to constitute a 3-layer type linear electric machinery provided with the PM magnetic pole 103 indicating accumulative excitement and being sandwiched by the conduction winding excited magnetic pole 101 and the magnetic circuit 102.

Fig. 37 is a schematic view showing a structure of the present invention applied in a 3-layer type linear electric machinery structure, wherein a PM magnetic pole indicating accumulative excitement sandwiched by a conduction winding excited individual magnetic pole and a magnetic circuit is disposed on an EME coupling aspect of the mid layer linear electric machinery structure in a direction facing the outer layer linear electric machinery structure.

As illustrated in Fig. 37 showing a 3-layer type linear electric machinery structure, the PM magnetic pole 103 indicating accumulative excitement sandwiched either in the mid section of the magnetic circuit of the conduction winding excited individual magnetic pole 101 or by the individual magnetic pole 101 and the magnetic circuit 102 to execute EME interaction with the outer layer linear electric machinery structure 63 is disposed on an EME coupling aspect of the mid layer linear electric machinery structure 62 in a direction facing the outer layer linear electric machinery structure 63, and the type of the electric machinery structure between the mid layer linear electric machinery structure 62 and the inner layer linear electric machinery structure 61 is selected upon its EME property to constitute a 3-layer type linear electric machinery provided with the PM magnetic pole 103 indicating accumulative excitement and being sandwiched by the conduction winding excited magnetic pole 101 and the magnetic circuit 102.

Fig. 38 is a schematic view showing a structure of the present invention applied in a 3-layer type linear electric machinery structure, wherein two PM magnetic poles indicating accumulative excitement each sandwiched by a conduction winding excited individual magnetic pole and a magnetic circuit are respectively disposed on an EME coupling aspect of the inner layer linear electric machinery structure in a direction facing the mid layer linear electric machinery structure and on an EME coupling aspect of the mid layer linear electric machinery structure in a direction facing the outer layer linear electric machinery structure.

As illustrated in Fig. 38 showing a 3-layer type linear electric machinery structure, an EME coupling aspect of the inner layer linear electric machinery structure 61 in a direction facing the mid layer linear electric machinery structure 62 and an EME coupling aspect of the mid layer linear electric machinery structure 62 in a direction facing the outer layer linear electric machinery structure 63 are each disposed with a PM magnetic pole 103 indicating accumulative excitement sandwiched either in the mid section of the magnetic circuit of the conduction winding excited individual magnetic pole 101 or by the individual magnetic pole 101 and the magnetic circuit 102 thus to constitute a 3-layer type linear electric machinery provided with two PM magnetic poles 103 indicating accumulative excitement and being sandwiched by the conduction winding excited magnetic pole 101 and the magnetic circuit 102.

Fig. 39 is a schematic view showing a structure of the present invention applied in a 3-layer type linear electric machinery structure, wherein two PM magnetic poles indicating accumulative excitement each sandwiched by a conduction winding excited individual magnetic pole and a magnetic circuit are respectively disposed on an EME coupling aspect of the outer layer linear electric machinery structure in a direction facing the mid layer linear electric machinery structure and on an EME coupling aspect of the mid layer linear electric machinery structure in a direction facing the inner layer linear electric machinery structure.

As illustrated in Fig. 39 showing a 3-layer type linear electric machinery structure, an EME coupling aspect of the outer layer linear electric machinery structure 63 in a direction facing the mid layer linear electric machinery structure 62 and an EME coupling aspect of the mid layer linear electric machinery structure 62 in a direction facing the inner layer linear electric machinery structure 61 are each disposed with a PM magnetic pole 103 indicating accumulative excitement sandwiched either in the mid section of the magnetic circuit of the conduction winding excited individual magnetic pole 101 or by the individual magnetic pole 101 and the magnetic circuit 102 thus to constitute a 3-layer type linear electric machinery provided with two PM magnetic poles 103 indicating accumulative excitement and being sandwiched by the conduction winding excited magnetic pole 101 and the magnetic circuit 102.

Fig. 40 is a schematic view showing a structure of the present invention applied in a 3-layer type linear electric machinery structure, wherein an EME coupling aspect of the outer layer linear electric machinery structure and an EME coupling aspect of the inner layer linear electric machinery structure to respectively execute EME coupling with the mid layer linear electric machinery structure are each disposed with a PM magnetic pole indicating accumulative excitement sandwiched by a conduction winding excited individual magnetic pole and a magnetic circuit.

As illustrated in Fig. 40 showing a 3-layer type linear electric machinery structure, wherein an EME coupling aspect of the outer layer linear electric machinery structure 63 and an EME coupling aspect of the inner layer linear electric machinery structure 61 to respectively execute EME coupling with the mid layer linear electric machinery structure 62 are each disposed with a PM magnetic pole 103 indicating accumulative excitement sandwiched either by the mid section of the magnetic circuit of a conduction winding excited individual magnetic pole 101 or by an individual magnetic pole 101 and a magnetic circuit 102 to execute EME interaction with the mid layer linear electric machinery structure 62, thus to constitute a 3-layer type linear electric machinery provided with two PM magnetic poles 103 each indicating accumulative excitement and being sandwiched by the conduction winding excited magnetic pole 101 and the magnetic circuit 102.

Fig. 41 is a schematic view showing a structure of the present invention applied in a 3-layer type linear electric machinery structure, wherein two PM magnetic poles indicating accumulative excitement sandwiched by a conduction winding excited individual magnetic pole and a magnetic circuit are respectively disposed on two EME coupling aspects on both sides of the mid layer linear electric machinery structure for executing EME coupling with both the outer layer linear electric machinery structure and the inner layer linear electric machinery structure.

As illustrated in Fig. 41 showing a 3-layer type linear electric machinery structure, two PM magnetic poles 103 indicating accumulative excitement sandwiched either in the mid section of the magnetic circuit of the conduction winding excited individual magnetic pole 101 or by the individual magnetic pole 101 and the magnetic circuit 102 are respectively disposed on two EME coupling aspects of the mid layer linear electric machinery structure 62 in a direction facing the inner layer linear electric machinery structure 61 and in another direction facing the outer layer linear electric machinery structure 63 to execute EME coupling with both the outer and the inner layer linear electric machinery structures 63 and 61 thus to constitute a 3-layer type linear electric machinery provided with the PM magnetic pole 103 indicating accumulative excitement and being sandwiched by the conduction winding excited magnetic pole 101 and the magnetic circuit 102.

Fig. 42 is a schematic view showing a structure of the present invention applied in a 3-layer type linear electric machinery structure, wherein the mid layer linear electric machinery structure for executing EME coupling with the inner and the outer layer linear electric machinery structures is disposed with a PM magnetic pole provided with a conduction winding indicating accumulative excitement for executing bilateral coupling with the inner and the outer layer linear electric machinery structures to constitute a magnetic pole.

As illustrated in Fig. 42 showing a 3-layer type linear electric machinery structure, wherein the mid layer linear electric machinery structure 62 for executing EME coupling with both the inner layer linear electric machinery structure 61 and the outer layer linear electric machinery structure 63 is disposed with a PM magnetic pole 103 to constitute a magnetic pole, and the magnetic poles on both ends of the PM magnetic pole 103 execute bilateral coupling with the inner layer linear electric machinery structure 61 and the outer layer linear electric machinery structure 63 respectively to achieve EME interaction, and a conduction excitement winding 100 is wound at the PM magnetic pole 103 thus further constituting a coaxial 3-layer type linear electric machinery with the winding indicating accumulative excitement wound at the PM magnetic pole 103.

In any of those preferred embodiments of the PM magnetic pole 103 and conduction excitement winding as illustrated in Figs. 12∼42, the disposed locations of said PM magnetic pole 103 and the conduction excitement winding 100 include disposed at and the mid electric machinery structure of the coaxial 3-ring electric machinery structure, the coaxial 3-layer plate electric machinery structure, the 3-layer linear electric machinery structure or other 3-piece electric machinery structure for executing EME interaction, wherein:
the mid electric machinery structure for disposing the PM magnetic pole 103 and the conduction excitement winding 100 either serves as the static portion of the electric machinery or is disposed with an optional conduction brush, conduction ring or conduction foil for serving as the mobile portion of the electric machinery.

Quantity of the magnetic pole disposed on the EME coupling aspect of each electric machinery structure for all those preferred embodiments described in Figs. 12 through 42 may be the same or different as applicable.

The PM magnetic pole 103 sandwiched by the conduction winding excited magnetic pole 101 and the magnetic circuit 102 as illustrated in Figs. 12∼42 may be fixed or sandwiched in a mid section of the magnetic circuit 102 between conduction winding excited individual magnetic poles 101 provided with different polarities as applicable.

Fig. 43 is a schematic view showing that the present invention is applied in a structure having a PM magnetic pole sandwiched in a mid section of the magnetic circuit between conduction winding excited individual magnetic poles provided with different polarities.

In any of those preferred embodiments of the present invention as illustrated in Figs. 12∼42, methods to input excitement electric energy of the conduction winding 100 disposed to the individual magnetic pole 101 include:
1. The excitement electric energy is inputted through a conduction ring and conduction brush when the structural component of the electric machinery containing the conduction winding excited individual magnetic pole is related to a mobile portion; or
2. The excitement electric energy is directly inputted when the structural component of the electric machinery containing the conduction winding excited individual magnetic pole is related to a static portion.

The applied structures of the electric machinery provided with a PM magnetic pole sandwiched by conduction winding excited individual magnetic pole and a magnetic circuit of the present invention include the cylinder electric machinery comprised of two structural components of electric machinery operating by EME interaction (as illustrated in Figs. 12 and 13) or the double layer type plate electric machinery (as illustrated in Fig. 23), or the double layer type linear electric machinery (as illustrated in Fig. 33) for producing function of a generator, a motor, both a generator and a motor, an EME vortex coupling transmission, or EME vortex braking function; and its operating styles include:
1. Either electric machinery structural component serves as a static portion of the electric machinery while another electric machinery structural component serves as a mobile portion of the electric machinery; or
2. Both electric machinery structural components function as the mobile portions of the electric machinery.

The applied structures of the electric machinery provided with a PM magnetic pole sandwiched by conduction winding excited magnetic pole and a magnetic circuit of the present invention include the coaxial 3-ring type electric machinery (as illustrated in Figs. 14∼22), the coaxial 3-layer type plate electric machinery (as illustrated in Figs. 24∼32) or the 3-layer type linear electric machinery (as illustrated in Figs. 34∼42) that comprised of three structural components of electric machinery operating by EME interaction, or other electric machinery structure comprised of three-piece electric machinery structural components to execute EME interaction in producing function of a generator, a motor, both a generator and a motor, an EME vortex coupling transmission, or EME vortex braking function; and its operating styles include:
1. One EM structural component serves as a static portion of the electric machinery while the other two EM structural components function as two mobile portions of the electric machinery; or
2. Two EM structural components serve as two static portions of the electric machinery while the third EM structural component serves as a mobile portion of the electric machinery; or
3. All three EM structural components each serves as mobile portions of the electric machinery.

Selection and layout of the electric machinery structure and winding for the electric machinery with a PM magnetic pole sandwiched in the conduction winding excited magnetic pole of any of those preferred embodiment illustrated in Figs. 2∼43 is disposed with electric machinery structural components including the conduction winding excited individual magnetic pole for sandwiching the PM magnetic pole and other structural components of the electric machinery to execute EME interaction are made according to the properties of the entire assembly of the electric machinery, nature of inputted electric energy, control function, control mode, and output performance requirements.

According to the selection of EME operational properties and the quantity of disposed magnetic poles, the assembly of the electric machinery having a PM magnetic pole sandwiched in the conduction winding excited magnetic pole of the present invention include those available for operating in DC or AC revolution or linear electric machinery are comprised of commutator brush, brushless, ring-brush, synchronous, asynchronous, internal revolving, external revolving, revolving at the middle of the electric machinery, double-acting, triple-acting, multi-layer type, multi-ring type, linear, DC brushless, or inverter electric machinery, or an electric machinery functioning as a generator or as a motor or as both a generator and a motor, coupling transmission device, as an EME vortex coupling transmission device, or an EME vortex braking device.

Accordingly, the electric machinery provided with a PM magnetic pole sandwiched in the conduction winding excited magnetic pole of the present invention by having disposed the PM magnetic pole 103 sandwiched between the conduction winding excited magnetic pole 101 and the magnetic circuit 102 is characterized in preventing PM magnetic pole from falling off and avoids its magnetic force of the PM magnetic pole from being weakened by inverse excitement during the operation when compared to the conventional electric machinery having adhered a PM magnetic pole to a polar face.

In one embodiment, the electric machine is a linearly-coupled, double-layer linear electric machine comprised of two layers of linear electric machine structures including an inner layer linear electric machinery structure (51) and an outer layer linear electric machine structure (52), and is characterised as in that:
the PM magnetic pole (103) indicating accumulative excitement is sandwiched either in the mid section of the magnetic circuit of the conduction winding individual magnetic pole (101), or by the individual magnetic pole (101) and the magnetic circuit (102) to execute EME interaction with the outer layer linear electric machine structure (52) disposed on an EME coupling aspect of the inner layer linear electric machinery structure (51) in a direction facing the outer layer linear electric machine structure (52), or the PM magnetic pole (103) indicating accumulative excitement is sandwiched either in the mid section of the magnetic circuit of the conduction winding individual magnetic pole (101), or by the individual magnetic pole (101) and the magnetic circuit 102 to execute EME interaction with the inner layer linear electric machine structure (51) is disposed on an EME coupling aspect of the outer layer linear electric machine structure (52) in a direction facing the inner layer linear electric machine structure (51), thereby to constitute a double-layer linear electric machine provided with a PM magnetic pole (103) indicating accumulative excitement, and being sandwiched between the conduction winding excited magnetic pole (101) and the magnetic circuit (102).

In another embodiment, the electric machine is linearly-coupled 3-layer linear electric machine comprised of inner layer, mid layer, and outer layer linear electric machine structures including an inner layer linear electric machinery structure (61), a mid layer linear electric machinery structure (62), and an outer layer linear electric machine structure (63), and is characterised as having:
(1) an EME coupling aspect of the inner layer linear electric machine structure (61) in a direction facing the mid layer linear electric machine structure (62); or
(2) an EME coupling aspect of the mid layer linear electric machine structure (62) in a direction facing the inner layer linear electric machine structure (61); or
(3) an EME coupling aspect of the outer layer linear electric machine structure (63) in a direction facing the mid layer linear electric machine structure (62); or
(4) an EME coupling aspect of the mid layer linear electric machine structure (62) in a direction facing the outer layer linear electric machine structure (63);
   the EME coupling aspect of the items (1), (2), (3) and (4) is respectively disposed with a conduction winding (100) excited individual magnetic pole (101), and the PM magnetic pole (103) indicating accumulative excitement sandwiched either in the mid section of the magnetic circuit of the individual magnetic pole (101), or by the individual pole 101 and the magnetic circuit 102, thereby to constitute a 3-layer linear electric machine provided with the PM magnetic pole (103) indicating accumulative excitement, and being sandwiched by the conduction winding excited magnetic pole (101) and the magnetic circuit (102).

In another embodiment, the electric machine is a linearly-coupled, 3-layer linear electric machine comprised of inner layer, mid layer, and outer layer linear electric machine structures including an inner layer linear electric machine structure (61), a mid layer linear electric machine comprised of inner layer, mid layer, and outer layer linear electric machine structures including an inner layer linear electric machine structure (61), a mid layer linear electric machine structure (62), and an outer layer linear electric machine structure (63), and is characterised as having:
(1) two EME coupling aspects respectively of the mid layer linear electric machine structure (62) in a direction facing the outer layer linear electric machine structure (63) and of the inner layer linear electric machine structure (61) in a direction facing the mid layer linear electric machine structure (62); or
(2) two EME coupling aspects respectively of the outer layer linear electric machine structure (63) in a direction facing the mid layer linear electric machine structure (62) and of the mid layer linear electric machine structure (62) in a direction facing the inner layer linear electric machine structure (61); or
(3) two EME coupling aspects respectively of the outer layer linear electric machine structure (63) in a direction facing the mid layer linear electric machine structure (62) and of the inner layer linear electric machine structure (61) in a direction facing the mid layer linear electric machine structure (62); or
(4) two EME coupling aspects on both sides of the mid layer linear electric machine structure (62) respectively in a direction facing the outer layer linear electric machine structure (63) and in another direction facing the inner layer linear electric machine structure (61);
   the EME coupling aspects of the items (1), (2), (3) and (4) are respectively disposed with a conduction winding (100) excited individual magnetic pole (101), and the PM magnetic pole (103) indicating accumulative excitement is sandwiched either in the mid section of the magnetic circuit of the individual magnetic pole (101) or by the individual pole (101) and the magnetic circuit (102), thereby to constitute a 3-layer linear electric machine provided with the PM magnetic pole (103) indicating accumulative excitement and being sandwiched by the conduction winding excited magnetic pole (101) and the magnetic circuit (102).

In another embodiment, the electric machine is a linearly-coupled, 3-layer linear electric machine comprised of inner layer, mid layer, and outer layer linear electric machine structures including an inner layer linear electric machine structure (61), a mid layer linear electric machinery structure (62), and an outer layer linear electric machine structure (63), and is characterised in that:
the mid layer electric machine structure (62) is disposed with a PM magnetic pole (103) to constitute a magnetic pole, and a conduction excitement winding (100) is wound round the PM magnetic pole (103), and the magnetic poles on both ends of the PM magnetic pole (103) are provided for executing EME interaction of bilateral coupling with both the inner layer electric machine structure (61) and the outer layer electric machine structure (63) thus further constituting a 3-layer linear electric machine indicating accumulative excitement winding wound at the PM magnetic pole (103).

The invention also provides an electric machine provided with a PM magnetic pole (103) sandwiched in a conduction winding excited magnetic pole wherein the disposed locations of the PM magnetic pole (103) and the conduction excitement winding (100) include being disposed at the mid electric machine structure of the coaxial 3-ring electric machine structure, the coaxial 3-layer plate electric machine structure, the 3-layer linear electric machine structure or other 3-piece electric machine structure for executing EME interaction, and wherein the mid electric machine structure is disposed between two electric machine structures to execute EME interaction therewith, and is characterised in that:
the mid electric machine structure for disposing the PM magnetic pole (103) and the conduction excitement winding (100) either serves as the static portion of the electric machine or is disposed with an optional conduction brush, conduction ring or conduction foil for serving as the mobile portion of the electric machine.

In another embodiment, methods to input excitement electric energy of the conduction winding (100) disposed round the individual magnetic pole (101) include:
(1) inputting excitement electric energy through a conduction ring and conduction brush when the structural component of the electric machine containing the conduction winding excited individual magnetic pole is a mobile portion; or
(2) directly inputting the excitement electric energy when the structural component of the electric machine containing the conduction winding excited individual magnetic pole is a static portion.

In another embodiment, the applied structures of the electric machine provided with a PM magnetic pole sandwiched by conduction winding excited magnetic pole and a magnetic circuit include a cylindrical electric machine comprised of two structural components operating by EME interaction, a double layer plate electric machine, or a double layer linear electric machine for producing the function of a generator, a motor, both a generator and a motor, an EME vortex coupling transmission, or an EME vortex braking function; and its operating styles include:
(1) either electric machine structural component serves as a static portion of the electric machine while another electric machine structural component serves as a mobile portion of the electric machine; or
(2) both electric machine structural components function as the mobile portions of the electric machine.

In another embodiment, the applied structures of the electric machine provided with a PM magnetic pole sandwiched by the conduction winding excited magnetic pole and a magnetic circuit include a coaxial 3-ring electric machine, a coaxial 3-layer plate electric machine, or a 3-layer linear electric machine that comprises three structural components operating by EME interaction, or other electric machine structure comprised of three-piece electric machine structural components to execute EME interaction in producing the function of a generator, a motor, both a generator and a motor, an EME vortex coupling transmission, or an EME vortex braking function; and its operating styles include:
(1) one EM structural component serves as a static portion of the electric machine, while the other two EM structural components serve as two mobile portions of the electric machine; or
(2) two EM structural components serve as two static portions of the electric machine, while the third EM structural component serves as a mobile portion of the electric machine; or
(3) all three EM structural components serves as mobile portions of the electric machine.

In another embodiment, selection and layout of the electric machine structure and winding for the electric machine with a PM magnetic pole sandwiched in the conduction winding excited magnetic pole is disposed with electric machine structural components including the conduction winding excited individual magnetic pole for sandwiching the PM magnetic pole and other structural components of the electric machine to execute EME interaction are made according to the properties of the entire assembly of the electric machine, the nature of inputted electric energy, the control function, the control mode, and the output performance requirements.

In another embodiment, the assembly of the electric machine having a PM magnetic pole sandwiched in the conduction winding excited magnetic pole according to the selection of EME operational properties and the quantity of disposed magnetic poles include those available for operating in DC or AC revolution or a linear electric machine comprised of a commutator brush, a brushless, a ring-brush, a synchronous, an asynchronous, an internal revolving, an external revolving, a revolving at the middle of the electric machine, a double-acting, a triple-acting, a multi-layer type, a multi-ring type, a linear, a DC brushless, or an inverter electric machine, or an electric machine functioning as a generator or as a motor, or functioning as both a generator and a motor, a coupling transmission device, as an EME vortex coupling transmission device, or an EME vortex braking device.

## Claims

1. An electric machinery provided with a PM magnetic pole sandwiched in a conduction winding excited magnetic pole is **characterized** as having a PM magnetic pole 103 sandwiched by a conduction winding 100 excited magnetic pole 101 and a magnetic circuit 102 mounted in various types of the electric machinery of the prior art, and the magnetic pole 102 for mounting the magnetic pole and the magnetic pole 101 for disposing the conduction winding is comprised of a material of silicon steel, steel, or iron providing good permeability and made in an integral part or a stack of multiple sheets by lamination, or made by metallurgy from the dust of permeable material; a polar face of the magnetic pole 101 faces a structure of another electric machinery that interacts to execute EME; and the polar face of the magnetic pole 101 may be selected to indicate a convex, concave, or flat surface, or may be further disposed with a groove to indicate protrusion and indention pattern or a specific geometric form as applicable.

2. The electric machinery provided with a PM magnetic pole sandwiched in the conduction winding excited magnetic pole as claimed in Claim 1, wherein the PM magnetic pole 103 is disposed to be sandwiched by a conduction winding 100 excited individual magnetic pole 101 and a magnetic circuit 102 mounted in various types of the electric machinery of the prior art, and wherein the relation of the polarity between the conduction winding 100 and the PM magnetic pole 103 indicates the electric machinery property of either accumulative excitement or differential excitement.

3. The electric machinery provided with a PM magnetic pole sandwiched in the conduction winding excited magnetic pole as claimed in Claim 1, wherein the PM magnetic pole 103 is disposed to be sandwiched in the mid section of the magnetic pole 101, for disposing the conduction excitement winding 100, and wherein the relation of the polarity between the conduction winding 100 and the PM magnetic pole 103 indicates the electric machinery property of either accumulative excitement or differential excitement.

4. The electric machinery provided with a PM magnetic pole sandwiched in the conduction winding excited magnetic pole as claimed in Claim 1, wherein the PM magnetic pole 103 is disposed to be mounted on or sandwiched by the mid section of the magnetic circuit 102 between the conduction winding 100 excited individual magnetic poles 101 with different polarity, and wherein the relation of the polarity between the conduction winding 100 and the PM magnetic pole 103 indicates the electric machinery property of either accumulative excitement or differential excitement.

5. The electric machinery provided with a PM magnetic pole sandwiched in the conduction winding excited magnetic pole as claimed in Claim 1, wherein when applied in the commutator serial excitement or compounded excitement electric machinery to function as a motor or a generator, the conduction winding 100 and the armature 3 is in serial connection, thus by controlling the relation of the polarity between the conduction winding 100 and the PM magnetic pole 103 the corresponding electric machinery properties are as follows:
(1) When operating at the same revolving direction, the electric machinery operates under the electric machinery property of an accumulative excitement motor or an accumulative excitement generator; or
(2) When operating at the same revolving direction, the electric machinery operates under the electric machinery property of an accumulative excitement motor or a differential excitement generator; or
(3) When operating at the same revolving direction, the electric machinery operates under the electric machinery property of a differential excitement motor or an accumulative excitement generator; or
(4) When operating at the same revolving direction, the electric machinery operates under the electric machinery property of a differential excitement motor or a differential excitement generator; or
(5) When operating at opposite revolving direction, the electric machinery operates under the electric machinery property of an accumulative excitement motor or an accumulative excitement generator; or
(6) When operating at opposite revolving direction, the electric machinery operates under the electric machinery property of an accumulative excitement motor or a differential excitement generator; or
(7) When operating at opposite revolving direction, the electric machinery operates under the electric machinery property of a differential excitement motor or an accumulative excitement generator; or
(8) When operating at opposite revolving direction, the electric machinery operates under the electric machinery property of a differential excitement motor or a differential excitement generator;
The relation of polarity between the conduction winding 100 and the PM magnetic pole 103 of the electric machinery is operated by one or more than one ways of operations as follows including:
(1) By means of changing the direction of electric current of the conduction winding 100 to change the relation of the polarity between the conduction winding 100 and the PM magnetic pole 103 to be accumulative excitement or differential excitement;
(2) By means of switching the poles between positive and negative of the DC to change the relation of the polarity between the conduction winding 100 and the PM magnetic pole 103 to be accumulative excitement or differential excitement;
(3) By means of changing both or one of the revolving direction of the generator and the motor to change the relation of the polarity between the conduction winding 100 and the PM magnetic pole 103 to be accumulative excitement or differential excitement.

6. The electric machinery provided with a PM magnetic pole sandwiched in the conduction winding excited magnetic pole as claimed in Claim 1, wherein ways of sandwiching the PM magnetic pole 103 in the electric machinery provided with a PM magnetic pole sandwiched by conduction winding excited magnetic poles of the present invention include using a mechanical locking member to clamp or secure, a screw and a nut structure to lock up, a rivet to secure, a pin and a pinhole structure to fix, or a packing means in proper size and selected geometric form to insert, a magnetic circuit structure to clamp, a casing to clamp, a dedicated structural member to clamp, an adhesion to bind the PM magnetic pole 103, or using any other means of the prior art to secure the PM magnetic pole 103.

7. The electric machinery provided with a PM magnetic pole sandwiched in the conduction winding excited magnetic pole as claimed in Claim 1 is related to a cylinder electric machinery in a construction comprised of an inner layer electric machinery structure and an outer layer electric machinery structure including an inner layer electric machinery structure 11 and an outer layer electric machinery structure 12, and is **characterized** as having:
(1) an EME coupling aspect of the outer layer electric machinery structure 12 in a direction facing the inner layer electric machinery structure 11 to execute EME coupling; or
(2) an EME coupling aspect of the inner layer electric machinery structure 11 in a direction facing the outer layer electric machinery structure 12 to execute EME coupling;
the EME coupling aspect of above items (1) and (2) is respectively disposed with an conduction winding 100 excited individual magnetic pole 101, and the PM magnetic pole 103 indicating accumulative excitement is sandwiched either in the mid section of magnetic circuit of the individual magnetic pole 101 or by the individual pole 101 and the magnetic circuit 102 thus to constitute the cylinder electric machinery provided with the PM magnetic pole 103 indicating accumulative excitement and being sandwiched by the conduction winding excited magnetic pole 101 and the magnetic circuit 102.

8. The electric machinery provided with a PM magnetic pole sandwiched in the conduction winding excited magnetic pole as claimed in Claim 1 is related to a coaxial 3-ring type electric machinery to engage in coaxial operation by insertion of an inner ring, a mid ring, and the outer ring electric machinery structures including the inner ring electric machinery structure 21, the mid ring electric machinery structure 22, and the outer ring electric machinery structure 23, and is **characterized** as having:
(1) an EME coupling aspect of the outer ring electric machinery structure 23 in a direction facing the mid ring electric machinery structure 22; or
(2) an EME coupling aspect of the mid ring electric machinery structure 22 in a direction facing the inner ring electric machinery structure 21; or
(3) an EME coupling aspect of the inner ring electric machinery structure 21 in a direction facing the mid ring electric machinery structure 22; or
(4) an EME coupling aspect of the mid ring electric machinery structure 22 in a direction facing the outer ring electric machinery structure 23;
the EME coupling aspect of above items (1), (2), (3) and (4) is respectively disposed with an conduction winding 100 excited individual magnetic pole, and the PM magnetic pole 103 indicating accumulative excitement is sandwiched either in the mid section of the magnetic circuit of the individual magnetic pole 101 or by the individual pole 101 and the magnetic circuit 102 thus to constitute the coaxial 3-ring type electric machinery provided with the PM magnetic pole 103 indicating accumulative excitement and being sandwiched by the conduction winding excited magnetic pole 101 and the magnetic circuit 102.

9. The electric machinery provided with a PM magnetic pole sandwiched in the conduction winding excited magnetic pole as claimed in Claim 1 is related to a coaxial 3-ring type electric machinery to engage in coaxial operation by insertion of an inner ring, a mid ring, and the outer ring electric machinery structures including the inner ring electric machinery structure 21, the mid ring electric machinery structure 22, and the outer ring electric machinery structure 23, and is **characterized** as having:
(1) an EME coupling aspect of the outer ring electric machinery structure 23 in a direction facing the mid ring electric machinery structure 22 and an EME coupling aspect of the mid ring electric machinery structure 22 in a direction facing the inner ring electric machinery structure 21; or
(2) an EME coupling aspect of the inner ring electric machinery structure 21 in a direction facing the mid ring electric machinery structure 22 and an EME coupling aspect of the mid ring electric machinery structure 22 in a direction facing the outer ring electric machinery structure 23; or
(3) an EME coupling aspect of the outer ring electric machinery structure 23 in a direction facing the mid ring electric machinery structure 22 and an EME coupling aspect of the inner ring electric machinery structure 21 in a direction facing the mid ring electric machinery structure 22; or
(4) two EME coupling aspects on both sides of the mid ring electric machinery structure 22 respectively in a direction facing the outer ring electric machinery structure 23 and in another direction facing the inner ring electric machinery structure 21;
the EME coupling aspects of above items (1), (2), (3) and (4) are respectively disposed with an conduction winding 100 excited individual magnetic pole 101, and the PM magnetic pole 103 indicating accumulative excitement is sandwiched either in the mid section of the magnetic circuit of the individual magnetic pole 101 or by the individual pole 101 and the magnetic circuit 102 thus to constitute the coaxial 3-ring type electric machinery provided with the PM magnetic pole 103 indicating accumulative excitement and being sandwiched by the conduction winding excited magnetic pole 101 and the magnetic circuit 102.

10. The electric machinery provided with a PM magnetic pole sandwiched in the conduction winding excited magnetic pole as claimed in Claim 1 is related to a coaxial 3-ring type electric machinery to engage in coaxial operation by insertion of an inner ring, a mid ring, and the outer ring electric machinery structures including the inner ring electric machinery structure 21, the mid ring electric machinery structure 22, and the outer ring electric machinery structure 23, and is **characterized** as:
the mid ring electric machinery structure 22 is disposed with a PM magnetic pole 103 to constitute a magnetic pole and a conduction excitement winding 100 is wound to the PM magnetic pole 103, and the magnetic poles on both ends of the PM magnetic pole 103 are provided for executing EME interaction of bilateral coupling with both the inner ring electric machinery structure 21 and the outer ring electric machinery structure 23 thus further constituting a coaxial 3-ring type electric machinery with the winding indicating accumulative excitement wound at the PM magnetic pole 103.

11. The electric machinery provided with a PM magnetic pole sandwiched in the conduction winding excited magnetic pole as claimed in Claim 1 is related to a coaxial double layer type plate electric machinery comprised of two layers of electric machinery structure laminated to engage in coaxial operation including the inner layer plate electric machinery structure 31 and the outer layer plate electric machinery structure 32, and is **characterized** as:
the PM magnetic pole 103 indicating accumulative excitement sandwiched either in the mid section of the magnetic circuit of the conduction winding individual magnetic pole 101 or by the individual magnetic pole 101 and the magnetic circuit 102 to execute EME interaction with the outer layer plate electric machinery structure 32 is disposed on an EME coupling aspect of the inner layer plate electric machinery structure 31 in a direction facing the outer layer plate electric machinery structure 32, or the PM magnetic pole 103 indicating accumulative excitement sandwiched either in the mid section of the magnetic circuit of the conduction winding individual magnetic pole 101 or by the individual magnetic pole 101 and the magnetic circuit 102 to execute EME interaction with the inner layer plate electric machinery structure 31 is disposed on an EME coupling aspect of the outer layer plate electric machinery structure 32 in a direction facing the inner layer plate electric machinery structure 31 thus to constitute a coaxial double layer type plate electric machinery provided with a PM magnetic pole 103 indicating accumulative excitement and being sandwiched by the conduction winding excited magnetic pole 101 and the magnetic circuit 102.

12. The electric machinery provided with a PM magnetic pole sandwiched in the conduction winding excited magnetic pole as claimed in Claim 1 is related to a coaxial 3-layer type plate electric machinery comprised of an inner, a mid, and an outer layer electric machinery structures coaxially laminated to engage in coaxial operation including the inner layer plate electric machinery structure 41, the mid layer plate electric machinery structure 42, and the outer layer plate electric machinery structure 43, and is **characterized** as having:
(1) an EME coupling aspect of the inner layer plate electric machinery 41 in a direction facing the mid layer plate electric machinery structure 42; or
(2) an EME coupling aspect of the mid layer plate electric machinery 42 in a direction facing the inner layer plate electric machinery structure 41; or
(3) an EME coupling aspect of the mid layer plate electric machinery 42 in a direction facing the outer layer plate electric machinery structure 43; or
(4) an EME coupling aspect of the outer layer plate electric machinery 43 in a direction facing the mid layer plate electric machinery structure 42;
the EME coupling aspect of above items (1), (2), (3) and (4) is respectively disposed with an conduction winding 100 excited individual magnetic pole 101, and the PM magnetic pole 103 indicating accumulative excitement is sandwiched either in the mid section of the magnetic circuit of the individual magnetic pole 101 or by the individual pole 101 and the magnetic circuit 102 thus to constitute the coaxial 3-layer type plate electric machinery provided with the PM magnetic pole 103 indicating accumulative excitement and being sandwiched by the conduction winding excited magnetic pole 101 and the magnetic circuit 102.

13. The electric machinery provided with a PM magnetic pole sandwiched in the conduction winding excited magnetic pole as claimed in Claim 1 is related to a coaxial 3-layer type plate electric machinery comprised of an inner, a mid, and an outer layer electric machinery structures laminated to engage in coaxial operation including the inner layer plate electric machinery structure 41, the mid layer plate electric machinery structure 42, and the outer layer plate electric machinery structure 43, and is **characterized** as having:
(1) two EME coupling aspects respectively of the inner layer plate electric machinery structure 41 in a direction facing the mid layer plate electric machinery structure 42 and of the mid layer plate electric machinery structure 42 in another direction facing the outer layer plate electric machinery structure 43; or
(2) two EME coupling aspects respectively of the outer layer plate electric machinery structure 43 in a direction facing the mid layer plate electric machinery structure 42 and of the mid layer plate electric machinery structure 42 in another direction facing the inner layer plate electric machinery structure 41; or
(3) two EME coupling aspects respectively of the inner layer plate electric machinery structure 41 and the outer layer plate electric machinery structure 43 in a direction facing the mid layer plate electric machinery structure 42; or
(4) two EME coupling aspects on both sides of the mid layer plate electric machinery structure 42 respectively in a direction facing the inner layer plate electric machinery structure 41 and in another direction facing the outer layer plate electric machinery structure 43;
the EME coupling aspects of above items (1), (2), (3) and (4) are respectively disposed with an conduction winding 100 excited individual magnetic pole 101, and the PM magnetic pole 103 indicating accumulative excitement is sandwiched either in the mid section of the magnetic circuit of the individual magnetic pole 101 or by the individual pole 101 and the magnetic circuit 102 thus to constitute the coaxial 3-layer type plate electric machinery provided with the PM magnetic pole 103 indicating accumulative excitement and being sandwiched by the conduction winding excited magnetic pole 101 and the magnetic circuit 102.

14. The electric machinery provided with a PM magnetic pole sandwiched in the conduction winding excited magnetic pole as claimed in Claim 1 is related to a coaxial 3-layer type plate electric machinery comprised of an inner, a mid, and an outer layer electric machinery structures laminated to engage in coaxial operation including the inner layer plate electric machinery structure 41, the mid layer plate electric machinery structure 42, and the outer layer plate electric machinery structure 43, and is **characterized** as:
the mid layer plate electric machinery structure 42 is disposed with a PM magnetic pole 103 to constitute a magnetic pole and a conduction excitement winding 100 is wound to the PM magnetic pole 103, and the magnetic poles on both ends of the PM magnetic pole 103 are provided for executing EME interaction of bilateral coupling with both the inner layer plate electric machinery structure 41 and the outer layer plate electric machinery structure 43 thus further constituting a coaxial 3-layer type plate electric machinery indicating accumulative excitement winding wound at the PM magnetic pole 103.

15. An electric machine is provided with a PM magnetic pole (103) sandwiched by conduction winding excited magnetic poles.
